# EUROPEAN PATENT APPLICATION

(11) **EP 4 411 928 A1**
(43) Date of publication of application: **07.08.2024**
(21) Application number: 22875515.3
(22) Date of filing: 28.06.2022
(51) Int. Cl.: H01M 10/0585, H01M 10/052, H01M 10/0562, H01M 50/103, H01M 50/54, H01M 50/55

(54) **BATTERY AND METHOD FOR MANUFACTURING BATTERY**

(30) Priority: 28.09.2021 JP 2021158428
(71) Applicant: Panasonic Intellectual Property Management Co., Ltd., Kadoma-shi, Osaka 571-0057 (JP)
(72) Inventor: HONDA, Kazuyoshi, Kadoma-shi Osaka 571-0057 (JP); HIRANO, Koichi, Kadoma-shi Osaka 571-0057 (JP); KOGA, Eiichi, Kadoma-shi Osaka 571-0057 (JP); MORIOKA, Kazuhiro, Kadoma-shi Osaka 571-0057 (JP); KAWASE, Akira, Kadoma-shi Osaka 571-0057 (JP)
(74) Representative: Grünecker Patent- und Rechtsanwälte PartG mbB
(86) International application number: PCT/JP2022/025771
(87) International publication number: WO 2023/053636

(57) **Abstract**

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer in a first region of one of a plurality of side surfaces of the power-generating element, a counter-electrode lead, electrically connected to the counter-electrode layer, that covers the first region and the electrode insulating member, a counter-electrode insulating member covering the counter-electrode layer in a second region of one of the plurality of side surfaces, and an electrode lead, electrically connected to the electrode layer, that covers the second region and the counter-electrode insulating member. The first region and the second region are located on an identical side surface of the power-generating element.

## Description

### Technical Field

The present disclosure relates to a battery and a method for manufacturing a battery.

### Background Art

There have conventionally been known batteries in each of which a plurality of battery cells connected in series are connected in parallel to one another (see, for example, PTL 1 and PTL 2).

### Citation List

### Patent Literature

PTL 1: Japanese Unexamined Patent Application Publication No. 2013-120717
PTL 2: Japanese Unexamined Patent Application Publication No. 2008-198492

### Summary of Invention

### Technical Problem

There has been demand for further improvement in battery characteristic of the conventional batteries.

To address this problem, the present disclosure provides a high-performance battery and a method for manufacturing the same.

### Solution to Problem

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer in a first region of one of a plurality of side surfaces of the power-generating element, a counter-electrode lead, electrically connected to the counter-electrode layer, that covers the first region and the electrode insulating member, a counter-electrode insulating member covering the counter-electrode layer in a second region of one of the plurality of side surfaces, and an electrode lead, electrically connected to the electrode layer, that covers the second region and the counter-electrode insulating member. The first region and the second region are located on an identical side surface of the power-generating element.

A battery according to another aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer on a first side surface of the power-generating element, a counter-electrode lead, electrically connected to the counter-electrode layer, that covers the first side surface and the electrode insulating member, a counter-electrode insulating member covering the counter-electrode layer on a second side surface of the power-generating element, an electrode lead, electrically connected to the electrode layer, that covers the second side surface and the counter-electrode insulating member, a counter-electrode collector terminal connected to the counter-electrode lead, and an electrode collector terminal connected to the electrode lead. The counter-electrode collector terminal and the electrode collector terminal are provided at an identical side surface of the power-generating element.

A method for manufacturing a battery according to an aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member in a first region of one of a plurality of side surfaces of the layered product and covering the counter-electrode layer with a counter-electrode insulating member in a second region of one of the plurality of side surfaces of the layered product, and covering the first region and the electrode insulating member with a counter-electrode lead electrically connected to the counter-electrode layer and covering the second region and the counter-electrode insulating member with an electrode lead electrically connected to the electrode layer. The first region and the second region are located on an identical side surface of the layered product.

A method for manufacturing a battery according to another aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member on a first side surface of the layered product and covering the counter-electrode layer with a counter-electrode insulating member on a second side surface of the layered product, covering the first side surface and the electrode insulating member with a counter-electrode lead electrically connected to the counter-electrode layer and covering the second side surface and the counter-electrode insulating member with an electrode lead electrically connected to the electrode layer, and providing, at an identical side surface of the layered product, a counter-electrode collector terminal connected to the counter-electrode lead and an electrode collector terminal connected to the electrode lead.

### Advantageous Effects of Invention

The present disclosure makes it possible to provide a high-performance battery and a method for manufacturing the same.

### Brief Description of Drawings

[Fig. 1] Fig. 1 is a side view of a battery according to Embodiment 1.
[Fig. 2A] Fig. 2A is a cross-sectional view of the battery according to Embodiment 1.
[Fig. 2B] Fig. 2B is a cross-sectional view of the battery according to Embodiment 1.
[Fig. 3A] Fig. 3A is a cross-sectional view of an example of a battery cell included in a power-generating element according to Embodiment 1.
[Fig. 3B] Fig. 3B is a cross-sectional view of another example of a battery cell included in the power-generating element according to Embodiment 1.
[Fig. 3C] Fig. 3C is a cross-sectional view of another example of a battery cell included in the power-generating element according to Embodiment 1.
[Fig. 4] Fig. 4 is a cross-sectional view of the power-generating element according to Embodiment 1.
[Fig. 5] Fig. 5 is a side view showing a positional relationship between one side surface of a power-generating element according to Embodiment 2 and an insulating layer provided on the side surface.
[Fig. 6] Fig. 6 is a side view of a battery according to Embodiment 2.
[Fig. 7A] Fig. 7A is a cross-sectional view of a battery according to Embodiment 3.
[Fig. 7B] Fig. 7B is a cross-sectional view of the battery according to Embodiment 3.
[Fig. 8] Fig. 8 is a side view of a battery according to Embodiment 4.
[Fig. 9A] Fig. 9A is a cross-sectional view of the battery according to Embodiment 4.
[Fig. 9B] Fig. 9B is a cross-sectional view of the battery according to Embodiment 4.
[Fig. 10] Fig. 10 is a cross-sectional view of a battery according to Embodiment 5.
[Fig. 11] Fig. 11 is a top view of the battery according to Embodiment 5.
[Fig. 12] Fig. 12 is a side view of the battery according to Embodiment 5.
[Fig. 13] Fig. 13 is a side view of a battery according to Embodiment 6.
[Fig. 14A] Fig. 14A is a cross-sectional view of the battery according to Embodiment 6.
[Fig. 14B] Fig. 14B is a cross-sectional view of the battery according to Embodiment 6.
[Fig. 15] Fig. 15 is a cross-sectional view of a battery according to a modification of Embodiment 6.
[Fig. 16] Fig. 16 is a side view of a battery according to the modification of Embodiment 6.
[Fig. 17A] Fig. 17A is a cross-sectional view of a battery according to Embodiment 7.
[Fig. 17B] Fig. 17B is a cross-sectional view of the battery according to Embodiment 7.
[Fig. 18A] Fig. 18A is a cross-sectional view of a battery according to Embodiment 8.
[Fig. 18B] Fig. 18B is a cross-sectional view of the battery according to Embodiment 8.
[Fig. 19A] Fig. 19A is a cross-sectional view of a battery according to Embodiment 9.
[Fig. 19B] Fig. 19B is a cross-sectional view of the battery according to Embodiment 9.
[Fig. 20] Fig. 20 is a flow chart showing an example of a method for manufacturing a battery according to each embodiment.
[Fig. 21] Fig. 21 is a flow chart showing another example of a method for manufacturing a battery according to each embodiment.

### Description of Embodiments

### (Brief Overview of the Present Disclosure)

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer in a first region of one of a plurality of side surfaces of the power-generating element, a counter-electrode lead, electrically connected to the counter-electrode layer, that covers the first region and the electrode insulating member, a counter-electrode insulating member covering the counter-electrode layer in a second region of one of the plurality of side surfaces, and an electrode lead, electrically connected to the electrode layer, that covers the second region and the counter-electrode insulating member. The first region and the second region are located on an identical side surface of the power-generating element.

This makes it possible to achieve a high-performance battery. For example, this makes it possible to achieve a battery that is superior in mountability and reliability.

For example, both positive-electrode and negative-electrode external connecting terminals are provided at an identical side surface. This allows for compact mounting of the battery. Specifically, this makes it possible to reduce the size of a pattern (also referred to as "footprint") of connecting terminals that is formed on a printed circuit board. This also makes it possible to mount a board type battery in the upright position, thus making it possible, for example, to mount an arrangement of batteries in a narrow area.

Further, the mounting can involve the use of reflow solder connections, and mounting a board type battery in the upright position makes it possible to reduce the effect on the battery of heat on the printed circuit board in a reflow process. Specifically, the occurrence of a defect such as delamination of the battery due to heat can be reduced. Thus, the mountability of the battery can be enhanced.

Further, for example, in a case where a heat source is present on the printed circuit board, mounting the battery in the upright position makes it possible to keep the battery and the heat source away from each other during use of a product in which the battery has been mounted. This suppresses the rise in temperature of the battery, thus making it possible to enhance reliability. This also makes it unnecessary to provide a cooling fan to suppress the rise in temperature of the battery, thus making it possible to contribute to reducing the whole size of a device including the battery.

Further, the provision of the electrode insulating member and the counter-electrode insulating member on the side surfaces of the power-generating element makes it possible to reduce the occurrence of a short circuit between the electrode layer and the counter-electrode layer. Further, for example, electrically connecting all of the battery cells in parallel makes it possible to inhibit a particular battery cell from becoming overcharged or overdischarged due to variations in the capacity of the battery cells. In this way, the reliability of the battery can be enhanced.

Further, for example, a height of the counter-electrode lead from the identical side surface and a height of the electrode lead from the identical side surface may be equal to each other.

This makes it possible to facilitate mounting on a flat surface of a substrate or other circuit boards, making it possible to enhance the reliability of mounting.

Further, for example, the battery according to the aspect of the present disclosure may further include a sealing member that exposes at least part of the counter-electrode lead and at least part of the electrode lead and seals the power-generating element.

This makes it possible to protect the power-generating element, for example, from outside air and water, thus making it possible to further enhance the reliability of the battery.

Further, for example, the battery according to the aspect of the present disclosure may further include a counter-electrode collector terminal disposed in the first region and connected to the counter-electrode lead and an electrode collector terminal disposed in the second region and connected to the electrode lead.

Thus, the collector terminals can be made of a material that is different in property from that of which the leads are made. For example, as the material of which the leads are made, a material can be selected with a focus on having high conductivity, alloying with metal contained in a collector, or other properties. As the material of which the collector terminal is made, a material can be selected with a focus on flexibility, impact resistance, chemical stability, cost, construction spreadability, or other properties. In this way, a suitable material can be selected for each member. This makes it possible to bring about improvement in performance of the battery and enhance the manufacturability of the battery.

Further, a battery according to another aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer on a first side surface of the power-generating element, a counter-electrode lead, electrically connected to the counter-electrode layer, that covers the first side surface and the electrode insulating member, a counter-electrode insulating member covering the counter-electrode layer on a second side surface of the power-generating element, an electrode lead, electrically connected to the electrode layer, that covers the second side surface and the counter-electrode insulating member, a counter-electrode collector terminal connected to the counter-electrode lead, and an electrode collector terminal connected to the electrode lead. The counter-electrode collector terminal and the electrode collector terminal are provided at an identical side surface of the power-generating element.

This makes it possible to achieve a high-performance battery. For example, this makes it possible to achieve a battery that is superior in mountability and reliability. That is, in the battery according to the present aspect too, both positive-electrode and negative-electrode external connecting terminals are provided at an identical side surface. This makes it possible to mount the battery in the upright position. This makes it possible to reduce the effect of heat during mounting or during use of a product, making it possible to enhance the mountability and reliability of the battery. This also makes it unnecessary to provide a cooling fan, thus making it possible to contribute to reducing the whole size of a device including the battery.

Further, the provision of the electrode insulating member and the counter-electrode insulating member on the side surfaces of the power-generating element makes it possible to reduce the occurrence of a short circuit between the electrode layer and the counter-electrode layer. Further, for example, electrically connecting all of the battery cells in parallel makes it possible to inhibit a particular battery cell from becoming overcharged or overdischarged due to variations in the capacity of the battery cells. In this way, the reliability of the battery can be enhanced.

Further, for example, the battery according to the aspect of the present disclosure may further include an insulating layer disposed between the counter-electrode collector terminal and the identical side surface and between the electrode collector terminal and the identical side surface.

This makes it possible to ensure electrical insulation between the collector terminal and the electrode layer and between the collector terminal and the counter-electrode layer on the side surface at which the collector terminal is provided.

Further, for example, the identical side surface may be a side surface that is different from both the first side surface and the second side surface.

Further, for example, a height of the counter-electrode collector terminal from the identical side surface and a height of the electrode collector terminal from the identical side surface may be equal to each other.

This makes it possible to facilitate mounting on a flat surface of a substrate or other circuit boards, making it possible to enhance the reliability of mounting.

Further, for example, the battery according to the aspect of the present disclosure may further include a sealing member that exposes at least part of the counter-electrode collector terminal and at least part of the electrode collector terminal and seals the power-generating element, the electrode lead, and the counter-electrode lead.

This makes it possible to protect the power-generating element, for example, from outside air and water, thus making it possible to further enhance the reliability of the battery.

Further, for example, the counter-electrode layer may include a counter-electrode collector and a counter-electrode active material layer located between the counter-electrode collector and the solid electrolyte layer. At a side surface covered by the counter-electrode lead, the counter-electrode collector may project further than the counter-electrode active material layer, and the counter-electrode lead may be in contact with a principal surface of the counter-electrode collector.

Thus, in the projecting portion of the counter-electrode collector, the counter-electrode lead makes contact with not only an end face but also the principal surface of the counter-electrode collector. This causes an increase in area of contact between the counter-electrode lead and the counter-electrode collector, thus causing a decrease in resistance of connection between the counter-electrode lead and the counter-electrode collector and bringing about improvement in large-current characteristic. For example, this makes fast charging of the battery possible.

Further, for example, at the side surface covered by the counter-electrode lead, the counter-electrode active material layer may recede further than the electrode layer.

This makes it possible to further increase the area of contact between the counter-electrode lead and the counter-electrode collector, thus making it possible to further decrease the resistance of connection between the counter-electrode lead and the counter-electrode collector.

Further, for example, at the side surface covered by the counter-electrode lead, an end face of the counter-electrode collector and an end face of the electrode layer may be even with each other when viewed from a direction orthogonal to the principal surface.

This makes it possible, for example, to easily form the power-generating element by en-bloc cutting of the plurality of battery cells laminated. Using en-bloc cutting causes the areas of the electrode layer, the counter-electrode layer, and the solid electrolyte layer to be accurately determined without a gradual increase or decrease in film thickness at the beginning and end of coating of each layer. This reduces variations in the capacity of the battery cells, thus making it possible to improve the accuracy of battery capacity.

Further, for example, the electrode insulating member may cover at least part of the solid electrolyte layer on a side surface covered by the counter-electrode lead.

Thus, forming the electrode insulating member so as to cover as far as part of the solid electrolyte layer makes it possible to inhibit the electrode layer from being exposed without being covered with the electrode insulating member even in a case where there are variations in the size of the electrode insulating member. Further, since the solid electrolyte layer is typically made of a powdered material, there are very fine asperities on an end face of the solid electrolyte layer. This brings about improvement in adhesion strength of the electrode insulating member and improvement in insulation reliability. Thus, the reliability of the battery can be further enhanced.

Further, for example, the electrode insulating member may cover an area from the electrode layer to at least part of the counter-electrode layer on the side surface covered by the counter-electrode lead.

Thus, covering as far as part of the counter-electrode layer makes it possible to sufficiently inhibit the electrode layer from being exposed without being covered with the electrode insulating member. Further, for example, since the counter-electrode active material layer too is typically made of a powdered material, there are very fine asperities on an end face of the counter-electrode active material layer. This brings about further improvement in adhesion strength of the electrode insulating member and improvement in insulation reliability. This makes it possible to even further enhance the reliability of the battery.

Further, for example, the electrode insulating member may cover the electrode layer of each of the plurality of battery cells on a side surface covered by the counter-electrode lead, and the counter-electrode lead may be electrically connected to the counter-electrode layer of each of the plurality of battery cells.

This makes it possible to use the counter-electrode lead for connecting the plurality of battery cells in parallel. The counter-electrode lead can be brought into close contact with the first side surface and the electrode insulating member, so that the volume of a portion involved in parallel connection can be reduced. This makes it possible to increase the energy density of the battery.

Further, for example, the electrode insulating member may have a striped shape in a planar view of a side surface covered by the counter-electrode lead.

Thus, an end face of the electrode layer exposed in a striped shape at a first side surface can be effectively covered with a striped electrode insulating member.

Further, for example, the counter-electrode lead may include a first conductive member that makes contact with the counter-electrode layer and a second conductive member covering the first conductive member.

Thus, the counter-electrode lead can be made of a plurality of different materials that are different in property from each other. For example, as the material of which the first conductive member, which makes contact with the counter-electrode layer, is made, a material can be selected with a focus on having high conductivity, alloying with metal contained in a collector, or other properties. As the material of which the second conductive member is made, a material can be selected with a focus on flexibility, impact resistance, chemical stability, cost, construction spreadability, or other properties. In this way, a suitable material can be selected for each member. This makes it possible to bring about improvement in performance of the battery and enhance the manufacturability of the battery.

Further, for example, the electrode insulating member or the counter-electrode insulating member may contain resin.

This makes it possible to increase impact resistance of the battery. This also makes it possible to relax stress that is applied to the battery due to changes in temperature of the battery or due to expansion and contraction of the battery during charging and discharging.

Further, a method for manufacturing a battery according to an aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member in a first region of one of a plurality of side surfaces of the layered product and covering the counter-electrode layer with a counter-electrode insulating member in a second region of one of the plurality of side surfaces of the layered product, and covering the first region and the electrode insulating member with a counter-electrode lead electrically connected to the counter-electrode layer and covering the second region and the counter-electrode insulating member with an electrode lead electrically connected to the electrode layer. The first region and the second region are located on an identical side surface of the layered product.

This makes it possible to manufacture the aforementioned high-performance battery.

Further, a method for manufacturing a battery according to another aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member on a first side surface of the layered product and covering the counter-electrode layer with a counter-electrode insulating member on a second side surface of the layered product, covering the first side surface and the electrode insulating member with a counter-electrode lead electrically connected to the counter-electrode layer and covering the second side surface and the counter-electrode insulating member with an electrode lead electrically connected to the electrode layer, and providing, at an identical side surface of the layered product, a counter-electrode collector terminal connected to the counter-electrode lead and an electrode collector terminal connected to the electrode lead.

This makes it possible to manufacture the aforementioned high-performance battery.

The following describes embodiments in concrete terms with reference to the drawings.

It should be noted that the embodiments to be described below each illustrate a comprehensive and specific example. The numerical values, shapes, materials, constituent elements, placement and topology of constituent elements, steps, orders of steps, or other features that are shown in the following embodiments are just a few examples and are not intended to limit the present disclosure. Further, those of the constituent elements in the following embodiments which are not recited in an independent claim are described as optional constituent elements.

Further, the drawings are schematic views, and are not necessarily strict illustrations. Accordingly, for example, the drawings are not necessarily to scale. Further, in the drawings, substantially identical components are given identical reference signs, and a repeated description may be omitted or simplified.

Further, terms such as "parallel" or "orthogonal" used herein to show the way in which elements are interrelated, terms such as "rectangle" or "cuboid" used herein to show the shape of an element, and ranges of numerical values as used herein are not expressions that represent only exact meanings but expressions that are meant to also encompass substantially equivalent ranges, e.g. differences of approximately several percent.

Further, in the present specification and drawings, the x axis, the y axis, and the z axis represent the three axes of a three-dimensional orthogonal coordinate system. In a case where the planimetric shape of a power-generating element of a battery is a rectangle, the x axis and the y axis correspond to directions parallel with a first side of the rectangle and a second side orthogonal to the first side, respectively. The z axis corresponds to a direction of laminating of a plurality of battery cells included in the power-generating element.

Further, the term "direction of laminating" as used herein corresponds to a direction normal to principal surfaces of a collector and an active material layer. Further, the term "planar view" as used herein means a case where the battery is viewed from a direction perpendicular to a principal surface of a power-generating element, unless otherwise noted, e.g. in a case where the term is used alone. In the case of a phrase "planar view of a surface" such as "planar view of a first side surface", it means a case where the "surface" is viewed from the front.

Further, the terms "above" and "below" as used herein do not refer to an upward direction (upward in a vertical direction) and a downward direction (downward in a vertical direction) in absolute space recognition, but are used as terms that are defined by a relative positional relationship on the basis of an order of laminating in a laminating configuration. Further, the terms "above" and "below" are applied not only in a case where two constituent elements are placed at a spacing from each other with another constituent element present between the two constituent elements, but also in a case where two constituent elements touch each other by being placed in close contact with each other. In the following description, the negative side of the z axis is referred to as "below" or "lower", and the positive side of the z axis is referred to as "above" or "upper".

Further, the expression "covering A" as used herein means covering at least part of "A". That is, the expression "covering A" encompasses not only a case of "covering the whole of A" but also a case of "covering only part of A". Examples of "A" include side surfaces, principal surfaces, or other surfaces of predetermined members such as layers or terminals.

Further, the ordinal numbers such as "first" and "second" as used herein do not mean the number or order of constituent elements but are used for the purpose of avoiding confusion between constituent elements of the same type and distinguishing between them, unless otherwise noted.

### (Embodiment 1)

In the following, a configuration of a battery according to Embodiment 1 is described.

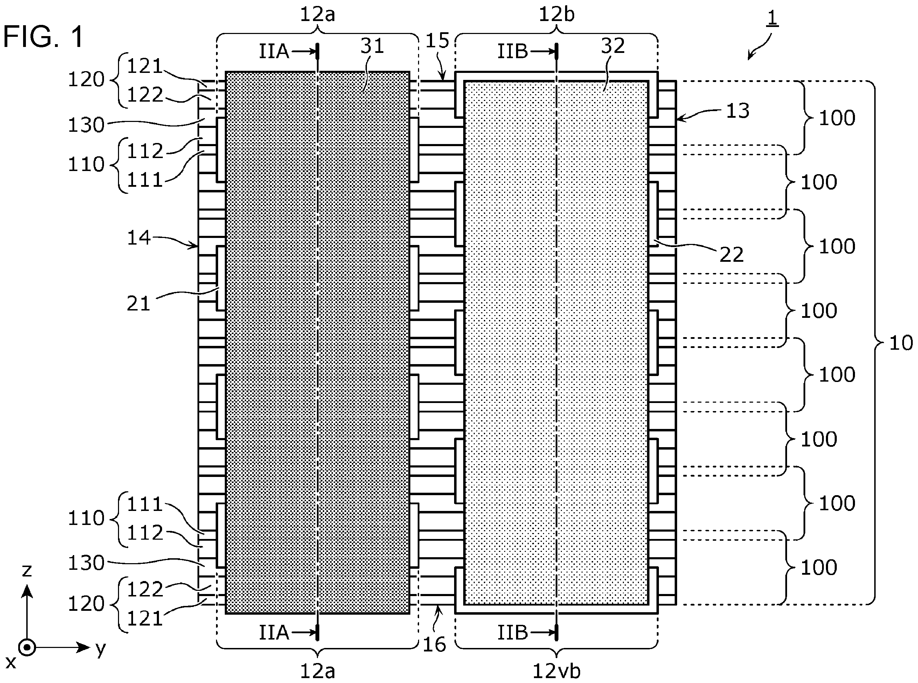

Fig. 1 is a side view of a battery 1 according to the present embodiment. As shown in Fig. 1, the battery 1 includes a power-generating element 10, an electrode insulating layer 21, a counter-electrode insulating layer 22, a counter-electrode lead 31, and an electrode lead 32. The battery 1 is for example an all-solid-state battery.

### [1. Power-generating Element]

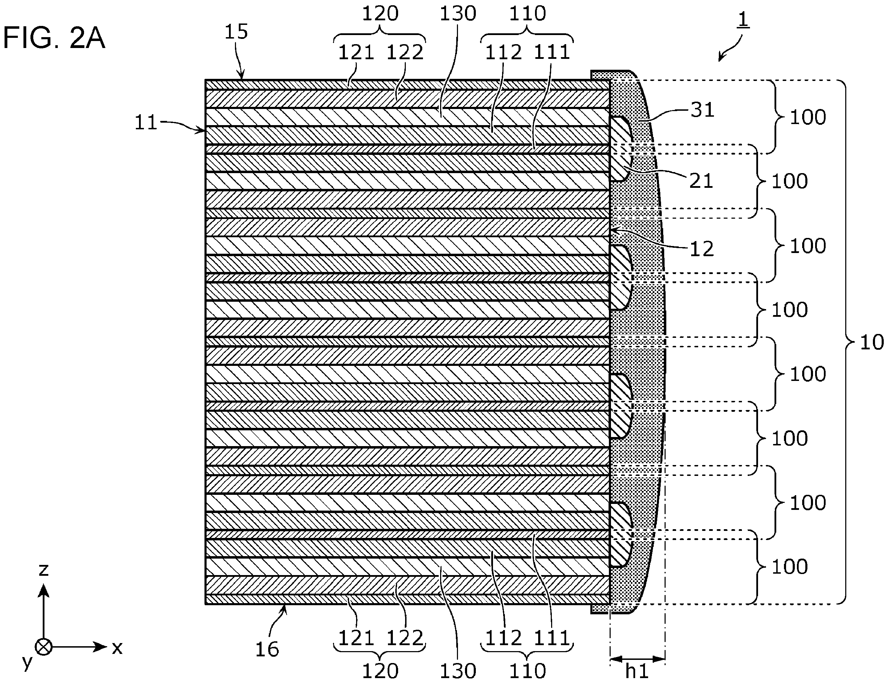

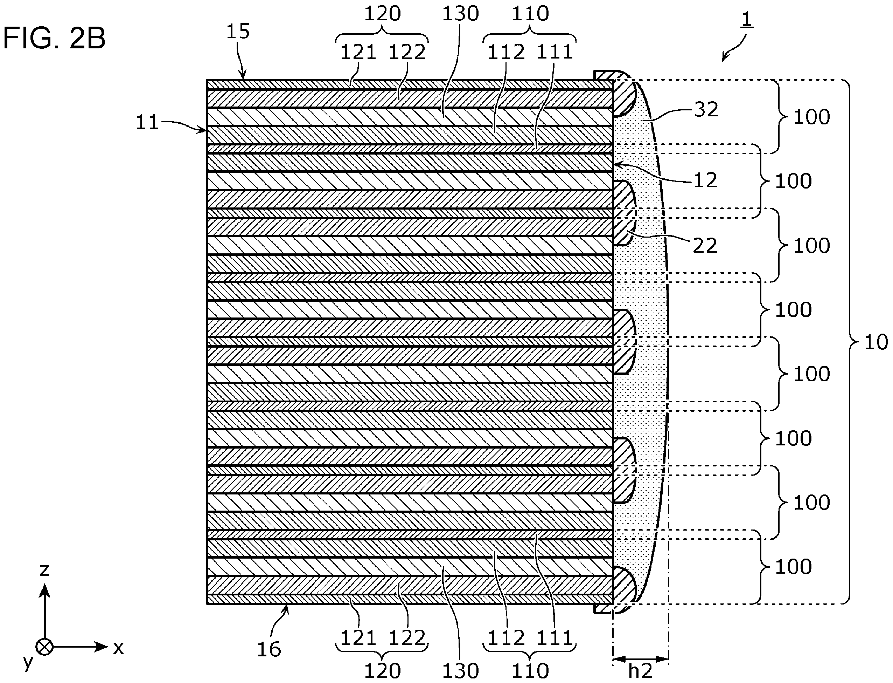

First, a configuration of the power-generating element 10 is described in concrete terms with reference to Fig. 1 and Figs. 2A and 2B. Fig. 2A is a cross-sectional view of the battery 1 according to the present embodiment and, specifically, represents a cross-section taken along line IIA-IIA in Fig. 1. Fig. 2B is a cross-sectional view of the battery 1 according to the present embodiment and, specifically, represents a cross-section taken along line IIB-IIB in Fig. 1. Fig. 1 shows a side surface 12 of the power-generating element 10.

The planimetric shape of the power-generating element 10 is for example a rectangle. That is, the shape of the power-generating element 10 is a flat cuboid. The term "flat" here means that a thickness (i.e. a length in a z-axis direction) is shorter than each side (i.e. lengths in x-axis and y-axis directions) or the maximum width of a principal surface. The planimetric shape of the power-generating element 10 may be another polygon such as a regular square, a hexagon, or an octagon or may be a circle or an ellipse. It should be noted that cross-sectional or side views of the battery 1 or the power-generating element 10 illustrate the thickness of each layer with exaggeration to make a layer structure of the power-generating element 10 easier to understand.

As shown in Fig. 1 and Figs. 2A and 2B, the power-generating element 10 includes four side surfaces 11, 12, 13, and 14 and two principal surfaces 15 and 16. In the present embodiment, the side surfaces 11, 12, 13, and 14 and the principal surfaces 15 and 16 are each a flat surface.

The side surface 11 is an example of the first side surface. The side surface 12 is an example of the second side surface. The side surfaces 11 and 12 face away from each other and are parallel to each other. The side surfaces 13 and 14 face away from each other and are parallel to each other. The side surfaces 11, 12, 13, and 14 are for example cut surfaces formed by en-bloc cutting of a layered product composed of a plurality of battery cells 100.

As shown in Fig. 1, the side surface 12 includes two regions 12a and 12b. For example, in a case where the side surface 12 is divided into two equal halves along a virtual line parallel to the z axis, the region 12a is included in one of the two halves, and the region 12b is included in the other.

The regions 12a and 12b are regions of the battery 1 that are used for counter-electrode leading and electrode leading. Specifically, the region 12a is an example of the first region, and is provided with the electrode insulating layer 21 and the counter-electrode lead 31. The region 12b is an example of the second region, which does not overlap the first region, and is provided with the counter-electrode insulating layer 22 and the electrode lead 32. That is, the counter-electrode lead 31 and the electrode lead 32 are provided on the identical side surface 12 of the power-generating element 10.

The principal surfaces 15 and 16 face away from each other and are parallel to each other. The principal surface 15 is the uppermost surface of the power-generating element 10. The principal surface 16 is the lowermost surface of the power-generating element 10. The principal surfaces 15 and 16 are larger in area than the side surfaces 11, 12, 13, and 14.

As shown in Fig. 1 and Figs. 2A and 2B, the power-generating element 10 includes the plurality of battery cells 100. Each of the battery cells 100 is a minimum constituent battery and is also referred to as "unit cell". The plurality of battery cells 100 are electrically connected in parallel and laminated. In the present embodiment, all of the battery cells 100 that the power-generating element 10 includes are electrically connected in parallel. Although, in the example shown in Fig. 1, the number of battery cells 100 that the power-generating element 10 includes is 8, this is not intended to impose any limitation. For example, the number of battery cells 100 that the power-generating element 10 includes may be an even number such a 2 or 4 or may be an odd number such as 3 or 5.

Each of the plurality of battery cells 100 includes an electrode layer 110, a counter-electrode layer 120, and a solid electrolyte layer 130. The electrode layer 110 includes an electrode collector 111 and an electrode active material layer 112. The counter-electrode layer 120 includes a counter-electrode collector 121 and a counter-electrode active material layer 122. In each of the plurality of battery cells 100, the electrode collector 111, the electrode active material layer 112, the solid electrolyte layer 130, the counter-electrode active material layer 122, and the counter-electrode collector 121 are laminated in this order along the z axis.

It should be noted that the electrode layer 110 is one of positive-electrode and negative-electrode layers of the battery cell 100. The counter-electrode layer 120 is the other of the positive-electrode and negative-electrode layers of the battery cell 100. The following gives a description by taking as an example a case where the electrode layer 110 is the negative-electrode layer and the counter-electrode layer 120 is the positive-electrode layer.

The plurality of battery cells 100 are substantially identical in configuration to one another. The order of arrangement of the layers of one of two adjacent battery cells 100 is opposite to the order of arrangement of the layers of the other of the two adjacent battery cells 100. That is, the plurality of battery cells 100 are laminated in an arrangement along the z axis so that orders of arrangement of the layers of the battery cells 100 alternate. In the present embodiment, the lowermost and uppermost layers of the power-generating element 10 are collectors of the same polarity, as the number of battery cells 100 is an even number.

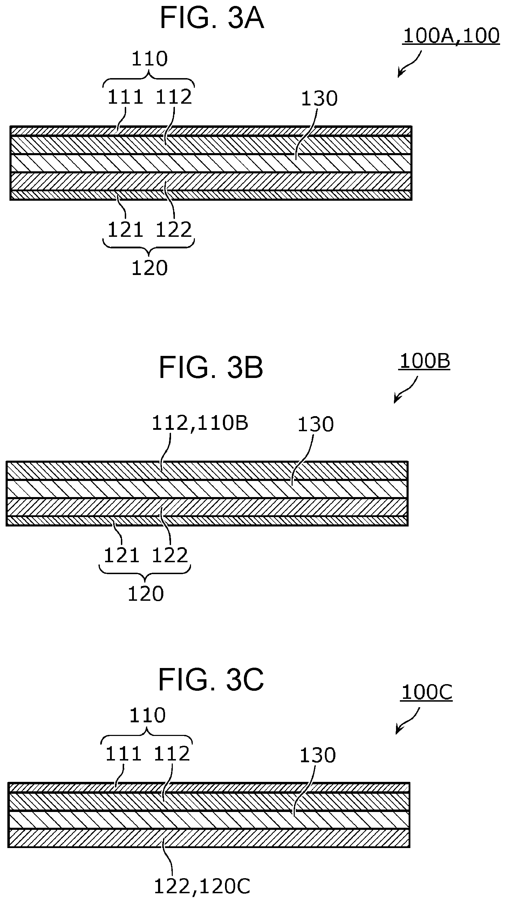

In the following, the layers of a battery cell 100 are described with reference to Fig. 3A. Fig. 3A is a cross-sectional view of a battery cell 100 included in the power-generating element 10 according to the present embodiment.

The electrode collector 111 and the counter-electrode collector 121 are each a foil-like, plate-like, or net-like member possessing electrical conductivity. The electrode collector 111 and the counter-electrode collector 121 may each for example be a thin film possessing electrical conductivity. Usable examples of a material of which the electrode collector 111 and the counter-electrode collector 121 are made include metals such as stainless steel (SUS), aluminum (Al), copper (Cu), and nickel (Ni). The electrode collector 111 and the counter-electrode collector 121 may be made of different materials.

Examples of the thicknesses of the electrode collector 111 and the counter-electrode collector 121 include, but are not limited to, thicknesses greater than or equal to 5 µm and less than or equal to 100 µm. The electrode active material layer 112 is in contact with a principal surface of the electrode collector 111. It should be noted that the electrode collector 111 may include a collector layer, provided in a portion that is in contact with the electrode active material layer 112, that is a layer containing an electrically conductive material. The counter-electrode active material layer 122 is in contact with a principal surface of the counter-electrode collector 121. It should be noted that the counter-electrode collector 121 may include a collector layer, provided in a portion that is in contact with the counter-electrode active material layer 122, that is a layer containing an electrically conductive material.

The electrode active material layer 112 is disposed on a principal surface of the electrode collector 111 that faces toward the counter-electrode layer 120. The electrode active material layer 112 contains, for example, a negative-electrode active material as an electrode material. The electrode active material layer 112 is placed opposite the counter-electrode active material layer 122.

Usable examples of the negative-electrode active material contained in the electrode active material layer 112 include negative-electrode active materials such as graphite and metallic lithium. Usable examples of materials for the negative-electrode active material include various types of material from and into which ions of lithium (Li), magnesium (Mg), or other substances can be desorbed and inserted.

Further, a possible example of a material contained in the electrode active material layer 112 may be a solid electrolyte such as an inorganic solid electrolyte. A usable example of the inorganic solid electrolyte is a sulfide solid electrolyte or an oxide solid electrolyte. A usable example of the sulfide solid electrolyte is a mixture of lithium sulfide (Li₂S) and diphosphorous pentasulfide (P₂S₅). Further, a possible example of a material contained in the electrode active material layer 112 may be an electrical conducting material such as acetylene black or a binder such as polyvinylidene fluoride.

The electrode active material layer 112 is fabricated by preparing a paste of paint into which the materials to be contained in the electrode active material layer 112 were kneaded together with a solvent, spreading the paste of paint over the principal surface of the electrode collector 111, and drying the paste of paint. For increased density of the electrode active material layer 112, an electrode layer 110 (also referred to as "electrode plate") including the electrode active material layer 112 and the electrode collector 111 may be pressed after the drying. Examples of the thickness of the electrode active material layer 112 include, but are not limited to, thicknesses greater than or equal to 5 µm and less than or equal to 300 µm.

The counter-electrode active material layer 122 is disposed on a principal surface of the counter-electrode collector 121 that faces toward the electrode layer 110. The counter-electrode active material layer 122 is a layer containing a positive-electrode material such as an active material. The positive-electrode material is a material that is opposite in polarity to a negative-electrode material. The counter-electrode active material layer 122 contains, for example, a positive-electrode active material.

Usable examples of the positive-electrode active material contained in the counter-electrode active material layer 122 include positive-electrode active materials such as a lithium cobalt oxide complex oxide (LCO), a lithium nickel oxide complex oxide (LNO), a lithium manganese oxide complex oxide (LMO), a lithium-manganese-nickel complex oxide (LMNO), a lithium-manganese-cobalt complex oxide (LMCO), a lithium-nickel-cobalt complex oxide (LNCO), a lithium-nickel-manganese-cobalt complex oxide (LNMCO). Usable examples of materials for the positive-electrode active material include various types of material from and into which ions of Li, Mg, or other substances can be desorbed and inserted.

Further, a possible example of a material contained in the counter-electrode active material layer 122 may be a solid electrolyte such as an inorganic solid electrolyte. A usable example of the inorganic solid electrolyte is a sulfide solid electrolyte or an oxide solid electrolyte. A usable example of the sulfide solid electrolyte is a mixture of Li₂S and P₂S₅. The positive-electrode active material may have a surface coated with the solid electrolyte. Further, a possible example of a material contained in the counter-electrode active material layer 122 may be an electrical conducting material such as acetylene black or a binder such as polyvinylidene fluoride.

The counter-electrode active material layer 122 is fabricated by preparing a paste of paint into which the materials to be contained in the counter-electrode active material layer 122 were kneaded together with a solvent, spreading the paste of paint over the principal surface of the counter-electrode collector 121, and drying the paste of paint. For increased density of the counter-electrode active material layer 122, a counter-electrode layer 120 (also referred to as "counter-electrode plate") including the counter-electrode active material layer 122 and the counter-electrode collector 121 may be pressed after the drying. Examples of the thickness of the counter-electrode active material layer 122 include, but are not limited to, thicknesses greater than or equal to 5 µm and less than or equal to 300 µm.

The solid electrolyte layer 130 is disposed between the electrode active material layer 112 and the counter-electrode active material layer 122. The solid electrolyte layer 130 is in contact with both the electrode active material layer 112 and the counter-electrode active material layer 122. The solid electrolyte layer 130 is a layer containing an electrolyte material. A usable example of the electrolyte material is a common publicly-known electrolyte for use in a battery. The solid electrolyte layer 130 may have a thickness greater than or equal to 5 µm and less than or equal to 300 µm or greater than or equal to 5 µm and less than or equal to 100 µm.

The solid electrolyte layer 130 contains a solid electrolyte. A usable example of the solid electrolyte is a solid electrolyte such as an inorganic solid electrolyte. A usable example of the inorganic solid electrolyte is a sulfide solid electrolyte or an oxide solid electrolyte. A usable example of the sulfide solid electrolyte is a mixture of Li₂S and P₂S₅. It should be noted that the solid electrolyte layer 130 may contain a binder such as polyvinylidene fluoride in addition to the electrolyte material.

In the present embodiment, the electrode active material layer 112, the counter-electrode active material layer 122, and the solid electrolyte layer 130 are maintained in a parallel plate state. This makes it possible to reduce the occurrence of a crack or a collapse due to bending. It should be noted that the electrode active material layer 112, the counter-electrode active material layer 122, and the solid electrolyte layer 130 may be smoothly bent together.

Further, in the present embodiment, an end face of the counter-electrode layer 120 located at the side surface 11 and an end face of the electrode layer 110 located at the side surface 11 are even with each other when viewed from the z-axis direction. Specifically, an end face of the counter-electrode collector 121 located at the side surface 11 and an end face of the electrode collector 111 located at the side surface 11 are even with each other when viewed from the z-axis direction. The same applies to end faces of the counter-electrode collector 121 and the electrode collector 111 located at the side surface 12.

More specifically, in the battery cell 100, the electrode collector 111, the electrode active material layer 112, the solid electrolyte layer 130, the counter-electrode active material layer 122, and the counter-electrode collector 121 are the same in shape and size as one another and have their contours in conformance with one another. That is, the battery cell 100 has the shape of a flat cuboidal plate.

As shown in Fig. 1 and Figs. 2A and 2B, in the present embodiment, two adjacent battery cells 100 share a collector with each other. For example, the lowermost battery cell 100 and a battery cell 100 a layer higher than the lowermost battery cell 100 share one electrode collector 111 with each other.

Specifically, as shown in Fig. 1 and Figs. 2A and 2B, in the plurality of battery cells 100, two electrode layers 110 adjacent to each other share each other's electrode collector 111. Electrode active material layers 112 are provided on both principal surfaces of the electrode collector 111 thus shared. Further, two counter-electrode layers 120 adjacent to each other share each other's counter-electrode collector 121. Counter-electrode active material layers 122 are provided on both principal surfaces of the counter-electrode collector 121 thus shared.

Such a battery 1 is formed by laminating not only the battery cell 100 shown in Fig. 3A but also a combination of battery cells 100B and 100C shown in Figs. 3B and 3C. It should be noted that the battery cell 100 shown in Fig. 3A is described as a battery cell 100A here.

The battery cell 100B shown in Fig. 3B has a configuration in which the electrode collector 111 is excluded from the battery cell 100A shown in Fig. 3A. That is, the battery cell 100B includes an electrode layer 110B composed solely of an electrode active material layer 112.

The battery cell 100C shown in Fig. 3C has a configuration in which the counter-electrode collector 121 is excluded from the battery cell 100A shown in Fig. 3A. That is, the battery cell 100C includes a counter-electrode layer 120C composed solely of a counter-electrode active material layer 122.

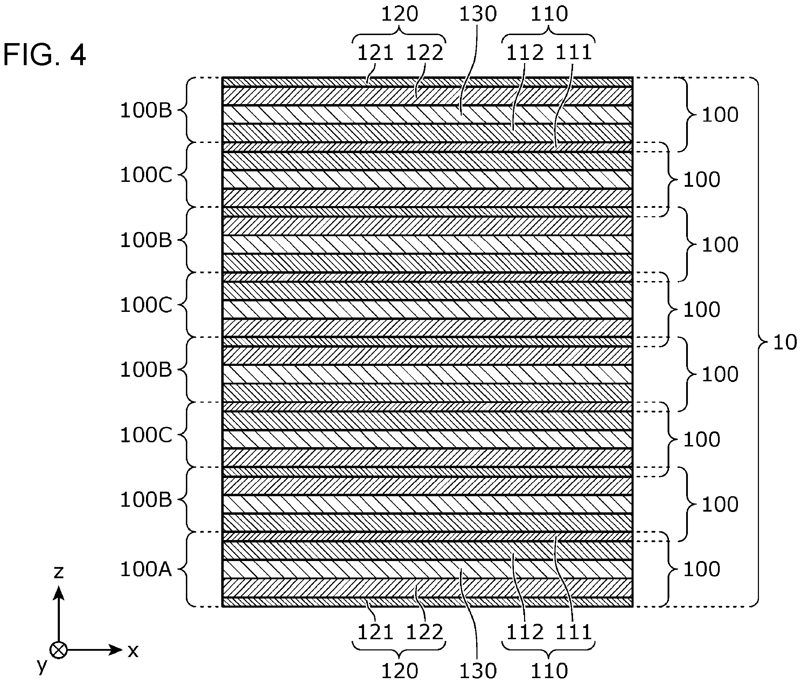

Fig. 4 is a cross-sectional view showing the power-generating element 10 according to the present embodiment. Fig. 4 is a diagram showing only the power-generating element 10. As shown in Fig. 4, the battery cell 100A is placed at the lowermost layer, and the battery cells 100B and 100C are alternately laminated upward. In this case, the battery cell 100B is laminated with the orientation illustrated in Fig. 3B turned upside down. In this way, the power-generating element 10 is formed.

It should be noted that this is not the only method for forming a power-generating element 10. For example, the battery cell 100A may be placed at the uppermost layer. Alternatively, the battery cell 100A may be placed in a position different from both the uppermost layer and the lowermost layer. Further, a plurality of the battery cells 100A may be used. Further, a unit of two battery cells 100 sharing a collector with each other may be formed by coating both sides of one collector, and the unit thus formed may be laminated.

As noted above, in the power-generating element 10 according to the present embodiment, all of the battery cells 100 are connected in parallel, and there are no battery cells connected in series. For this reason, during charging and discharging of the battery 1, there hardly occurs nonuniformity in charging and discharging states due to variations in the capacity of the battery cells 100 or other reasons. This makes it possible to drastically reduce the risk of one or some of the plurality of battery cells 100 becoming overcharged or overdischarged, making it possible to enhance the reliability of the battery 1.

### [2. Insulating Layers]

Next, the electrode insulating layer 21 and the counter-electrode insulating layer 22 are described.

The electrode insulating layer 21 is an example of the electrode insulating member and, as shown in Fig. 1, covers the electrode layer 110 in the region 12a of the side surface 12. Specifically, the electrode insulating layer 21 covers the electrode collector 111 and the electrode active material layer 112 in the region 12a of the side surface 12.

As shown in Fig. 1 and Fig. 2A, the electrode insulating layer 21 covers the electrode layer 110 of each of the plurality of battery cells 100 in the region 12a of the side surface 12. The electrode insulating layer 21 does not cover at least part of the counter-electrode layer 120 of each of the plurality of battery cells 100. For example, the electrode insulating layer 21 does not cover the counter-electrode collector 121. For this reason, the electrode insulating layer 21 has a striped shape in a planar view of the side surface 11.

In this case, the electrode insulating layer 21 continuously covers the electrode layers 110 of two adjacent battery cells 100. Specifically, the electrode insulating layer 21 continuously covers an area from at least part of the solid electrolyte layer 130 of one of the two adjacent battery cells 100 to at least part of the solid electrolyte layer 130 of the other of the two adjacent battery cells 100.

In this way, the electrode insulating layer 21 covers at least part of the solid electrolyte layer 130 in the region 12a of the side surface 12. Specifically, the contours of the electrode insulating layer 21 overlap the solid electrolyte layer 130 in a planar view of the side surface 12. This reduces the risk of exposing the electrode layer 110 even if there are fluctuations in width (length in the z-axis direction) due to variations in the manufacture of the electrode insulating layer 21. This makes it possible to reduce the risk of a short circuit between the electrode layer 110 and the counter-electrode layer 120 via the counter-electrode lead 31 formed to cover the electrode insulating layer 21. Further, there are very fine asperities on an end face of the solid electrolyte layer 130, which is made of a powdered material. For this reason, the electrode insulating layer 21 becomes embedded in the asperities, bringing about improvement in adhesion strength of the electrode insulating layer 21 and improvement in insulation reliability.

In the present embodiment, the electrode insulating layer 21 may cover the whole of the solid electrolyte layer 130 in the region 12a of the side surface 12. Specifically, the contours of the electrode insulating layer 21 may overlap a boundary between the solid electrolyte layer 130 and the counter-electrode active material layer 122. It is not essential, however, that the electrode insulating layer 21 cover part of the solid electrolyte layer 130. For example, the contours of the electrode insulating layer 21 may overlap a boundary between the solid electrolyte layer 130 and the electrode active material layer 112.

The counter-electrode insulating layer 22 is an example of the counter-electrode insulating member and, as shown in Fig. 1, covers the counter-electrode layer 120 in the region 12b of the side surface 12. Specifically, the counter-electrode insulating layer 22 covers the counter-electrode collector 121 and the counter-electrode active material layer 122 in the region 12b.

As shown in Fig. 1 and Fig. 2B, the counter-electrode insulating layer 22 covers the counter-electrode layer 120 of each of the plurality of battery cells 100 in the region 12b of the side surface 12. The counter-electrode insulating layer 22 does not cover at least part of the electrode layer 110 of each of the plurality of battery cells 100. For example, the counter-electrode insulating layer 22 does not cover the electrode collector 111. For this reason, the counter-electrode insulating layer 22 has a striped shape in a planar view of the side surface 12.

In this case, the counter-electrode insulating layer 22 continuously covers the counter-electrode layers 120 of two adjacent battery cells 100. Specifically, the counter-electrode insulating layer 22 continuously covers an area from at least part of the solid electrolyte layer 130 of one of the two adjacent battery cells 100 to at least part of the solid electrolyte layer 130 of the other of the two adjacent battery cells 100.

In this way, the counter-electrode insulating layer 22 covers at least part of the solid electrolyte layer 130 in the region 12b of the side surface 12. Specifically, the contours of the counter-electrode insulating layer 22 overlap the solid electrolyte layer 130 in a planar view of the side surface 12. This reduces the risk of exposing the counter-electrode layer 120 even if there are fluctuations in width (length in the z-axis direction) due to variations in the manufacture of the counter-electrode insulating layer 22. This makes it possible to reduce the risk of a short circuit between the counter-electrode layer 120 and the electrode layer 110 via the electrode lead 32 formed to cover the counter-electrode insulating layer 22. Further, the counter-electrode insulating layer 22 becomes embedded in asperities on an end face of the solid electrolyte layer 130, bringing about improvement in adhesion strength of the counter-electrode insulating layer 22 and improvement in insulation reliability.

In the present embodiment, the counter-electrode insulating layer 22 may cover the whole of the solid electrolyte layer 130 in the region 12b of the side surface 12. Specifically, the contours of the counter-electrode insulating layer 22 may overlap a boundary between the solid electrolyte layer 130 and the electrode active material layer 112. It is not essential, however, that the counter-electrode insulating layer 22 cover part of the solid electrolyte layer 130. For example, the contours of the counter-electrode insulating layer 22 may overlap a boundary between the solid electrolyte layer 130 and the counter-electrode active material layer 122.

Further, the power-generating element 10 according to the present embodiment has counter-electrode collectors 121 at both the uppermost layer and the lowermost layer. As shown in Fig. 1 and Fig. 2B, in the vicinities of the upper and lower ends of the side surface 12, the counter-electrode insulating layer 22 covers part of a principal surface of the counter-electrode collector 121 located at the uppermost layer and part of a principal surface of the counter-electrode collector 121 located at the lowermost layer. This causes the counter-electrode insulating layer 22 to have resistance to an external force or other forces from the z-axis direction and inhibits the counter-electrode insulating layer 22 from being detached. This also makes it possible to, even in a case where the electrode lead 32 wraps around the principal surface 15 or 16 of the power-generating element 10, prevent the electrode lead 32 from making a short circuit by making contact with the counter-electrode collector 121. In this way, the reliability of the battery 1 can be enhanced.

The electrode insulating layer 21 and the counter-electrode insulating layer 22 are each made of an insulating material possessing electrical insulating properties. For example, the electrode insulating layer 21 and the counter-electrode insulating layer 22 each contain resin. Examples of the resin include, but are not limited to, epoxy resin. As the insulating material, an inorganic material may be used. A usable insulating material is selected on the basis of various properties such as flexibility, gas barrier properties, impact resistance, and thermal resistance. The electrode insulating layer 21 and the counter-electrode insulating layer 22 are made of the same material as each other. Alternatively, they may be made of different materials from each other.

### [3. Leads]

Next, the counter-electrode lead 31 and the electrode lead 32 are described.

As shown in Fig. 1 and Fig. 2A, the counter-electrode lead 31 is an electric conductor, electrically connected to the counter-electrode layer 120, that covers the region 12a of the side surface 12 and the electrode insulating layer 21. Specifically, the counter-electrode lead 31 covers the electrode insulating layer 21 and a portion of the region 12a not covered with the electrode insulating layer 21.

In the portion of the region 12a not covered with the electrode insulating layer 21, as shown in Fig. 2A, end faces of the counter-electrode collector 121 and the counter-electrode active material layer 122 are exposed. For this reason, the counter-electrode lead 31 makes contact with the end faces of the counter-electrode collector 121 and the counter-electrode active material layer 122 to be electrically connected to the counter-electrode layer 120. Further, since the counter-electrode active material layer 122 is made of a powdered material, there are very fine asperities as in the case of the solid electrolyte layer 130. The counter-electrode lead 31 becomes embedded in the asperities on the end face of the counter-electrode active material layer 122, bringing about improvement in adhesion strength of the counter-electrode lead 31 and improvement in electrical connection reliability.

The counter-electrode lead 31 is electrically connected to the counter-electrode layer 120 of each of the plurality of battery cells 100. That is, the counter-electrode lead 31 functions to make each battery cell 100 to be electrically connected in parallel to the other battery cell 100. As shown in Fig. 1 and Fig. 2A, the counter-electrode lead 31 covers substantially the whole area from the lower end of the side surface 12 to the upper end en bloc.

The power-generating element 10 according to the present embodiment has counter-electrode collectors 121 at both the uppermost layer and the lowermost layer. As shown in Fig. 1 and Fig. 2A, in the vicinities of the upper and lower ends of the region 12a of the side surface 12, the counter-electrode lead 31 covers part of a principal surface of the counter-electrode collector 121 located at the uppermost layer and part of a principal surface of the counter-electrode collector 121 located at the lowermost layer. This causes the counter-electrode lead 31 to have resistance to an external force or other forces from the z-axis direction and inhibits the counter-electrode lead 31 from being detached. This causes an increase in area of contact between the counter-electrode lead 31 and the counter-electrode collectors 121, thus causing a decrease in resistance of connection between the counter-electrode lead 31 and the counter-electrode collectors 121 and bringing about improvement in large-current characteristic. For example, this makes fast charging of the battery 1 possible.

As shown in Fig. 1 and Fig. 2B, the electrode lead 32 is an electric conductor, electrically connected to the electrode layer 110, that covers the region 12b of the side surface 12 and the counter-electrode insulating layer 22. Specifically, the electrode lead 32 covers the counter-electrode insulating layer 22 and a portion of the region 12b not covered with the counter-electrode insulating layer 22.

In the portion of the region 12b not covered with the counter-electrode insulating layer 22, as shown in Fig. 2B, end faces of the electrode collector 111 and the electrode active material layer 112 are exposed. For this reason, the electrode lead 32 makes contact with the end faces of the electrode collector 111 and the electrode active material layer 112 to be electrically connected to the electrode layer 110. Further, since the electrode active material layer 112 is made of a powdered material, there are very fine asperities as in the case of the solid electrolyte layer 130. The electrode lead 32 becomes embedded in the asperities on the end face of the electrode active material layer 112, bringing about improvement in adhesion strength of the electrode lead 32 and improvement in electrical connection reliability.

The electrode lead 32 is electrically connected to the electrode layer 110 of each of the plurality of battery cells 100. That is, the electrode lead 32 functions to make each battery cell 100 to be electrically connected in parallel to the other battery cell 100. As shown in Fig. 1 and Fig. 2B, the electrode lead 32 covers substantially the whole area from the lower end of the side surface 12 to the upper end en bloc.

The counter-electrode lead 31 and the electrode lead 32 are made, for example, of a resin material possessing electrical conductivity. Alternatively, the counter-electrode lead 31 and the electrode lead 32 may be made of a metallic material such as solder. A usable electrically conductive material is selected on the basis of various properties such as flexibility, gas barrier properties, impact resistance, thermal resistance, and solder wettability. The counter-electrode lead 31 and the electrode lead 32 are made of the same material as each other. Alternatively, they may be made of different materials from each other.

In the present embodiment, the counter-electrode lead 31 and the electrode lead 32 are used as external connecting terminals of the battery 1. Specifically, the counter-electrode lead 31 and the electrode lead 32 are connected to a wiring pattern provided on a printed circuit board on which the battery 1 is mounted. The connections are for example reflow solder connections.

A height h1 of the counter-electrode lead 31 from the side surface 12 is for example equal to a height h2 of the electrode lead 32 from the side surface 12. This facilitates mounting on a flat surface such as a principal surface of the printed circuit board. As shown in Fig. 2A, the height h1 is the distance between a portion of the counter-electrode lead 31 that is furthest away from the side surface 12 and the side surface 12. As shown in Fig. 2B, the height h2 is the distance between a portion of the electrode lead 32 that is furthest away from the side surface 12 and the side surface 12.

### [4. Conclusion]

As noted above, in the battery 1 according to the present embodiment, the counter-electrode lead 31 and the electrode lead 32 are provided on the identical side surface 12. That is, both positive-electrode and negative-electrode external connecting terminals are provided at an identical side surface. This allows for compact mounting of the battery 1. Specifically, this makes it possible to reduce the size of a pattern (also referred to as "footprint") of connecting terminals that is formed on a printed circuit board. This also makes it possible to mount a board type battery 1 in the upright position, thus making it possible, for example, to mount an arrangement of batteries 1 in a narrow area.

Further, the mounting can involve the use of reflow solder connections, and mounting a board type battery 1 in the upright position makes it possible to reduce the effect on the battery of heat on the printed circuit board in a reflow process. Specifically, the occurrence of a defect such as delamination of the battery 1 due to heat can be reduced. Thus, the mountability of the battery 1 can be enhanced.

Further, for example, in a case where a heat source is present on the printed circuit board, mounting the battery 1 in the upright position makes it possible to keep the battery 1 and the heat source away from each other during use of a product in which the battery 1 has been mounted. This suppresses the rise in temperature of the battery 1, thus making it possible to enhance reliability. This also makes it unnecessary to provide a cooling fan to suppress the rise in temperature of the battery 1, thus making it possible to contribute to reducing the whole size of a device including the battery 1.

Further, the provision of the electrode insulating layer 21 and the counter-electrode insulating layer 22 on the side surface 12 of the power-generating element 10 makes it possible to reduce the occurrence of a short circuit between the electrode layer 110 and the counter-electrode layer 120. Further, for example, electrically connecting all of the battery cells 100 in parallel makes it possible to inhibit a particular battery cell 100 from becoming overcharged or overdischarged due to variations in the capacity of the battery cells. In this way, the reliability of the battery 1 can be enhanced.

Further, the counter-electrode lead 31 and the electrode lead 32 each function to make a parallel connection of the plurality of battery cells 100. As shown in Figs. 2A and 2B, the counter-electrode lead 31 and the electrode lead 32 are formed to be in close contact with and cover the side surface 12 of the power-generating element 10. This makes it possible to reduce the volumes of these leads. That is, this makes it possible to make terminal electrodes smaller in volume than collecting tab electrodes that have conventionally been used, thus bringing about improvement in energy density of the battery 1 per volume.

### (Embodiment 2)

The following describes Embodiment 2.

A battery according to Embodiment 2 differs from the battery according to Embodiment 1 in shape of an insulating layer provided on a side surface. The following gives a description with a focus on differences from Embodiment 1, and omits or simplifies a description of common features.

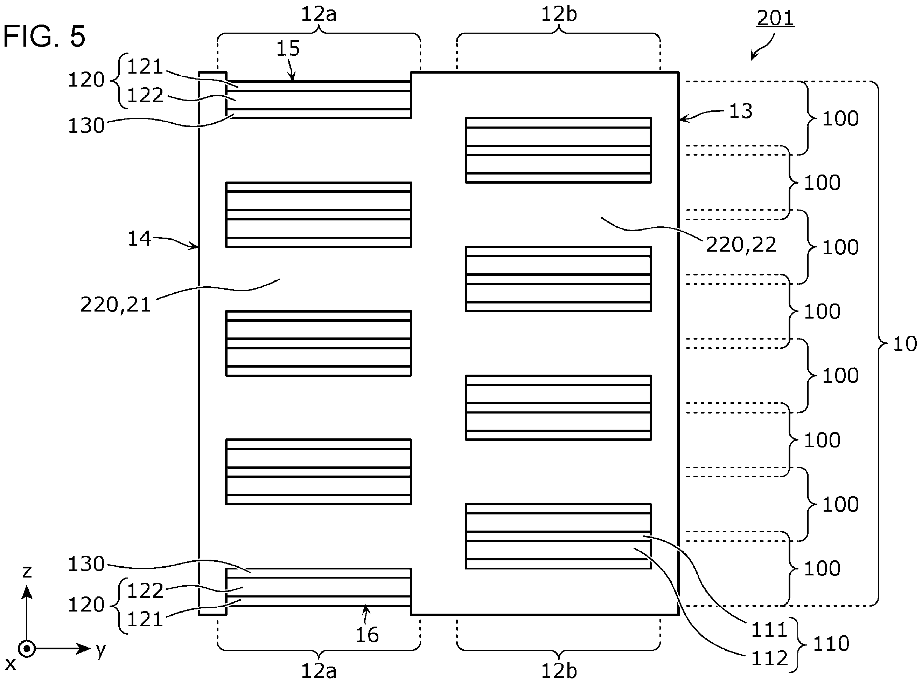

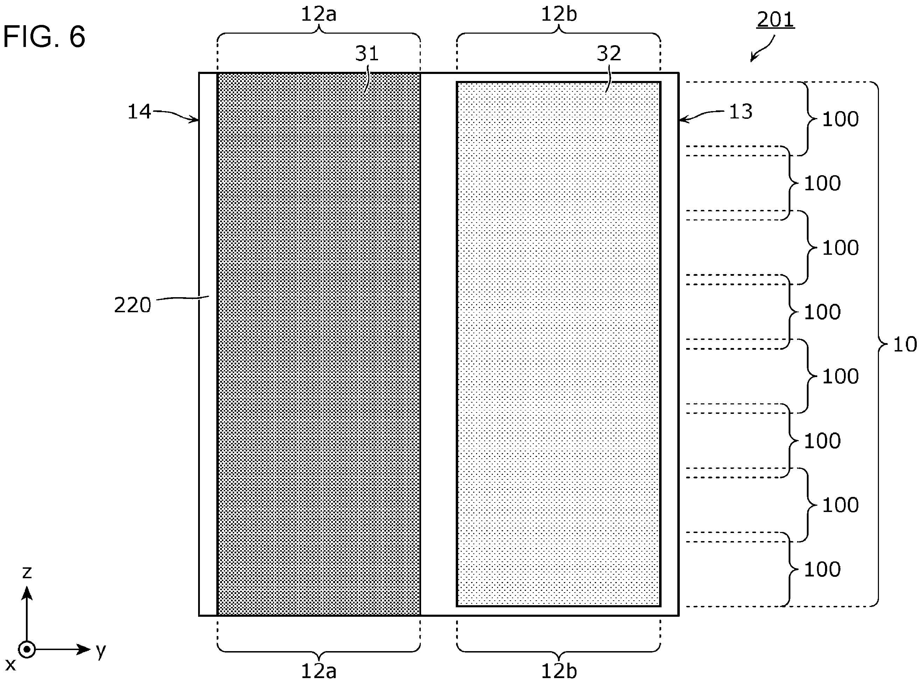

Fig. 5 is a side view showing a positional relationship between a side surface 12 of a power-generating element 10 according to the present embodiment and a side surface insulating layer 220 provided on the side surface 12. Fig. 6 is a side view of a battery 201 according to the present embodiment. Fig. 5 represents a state of Fig. 6 with the counter-electrode lead 31 and the electrode lead 32 removed.

As shown in Fig. 5, the battery 201 according to the present embodiment includes a side surface insulating layer 220 including an electrode insulating layer 21 and a counter-electrode insulating layer 22. The side surface insulating layer 220 covers a portion between the striped electrode insulating layer 21 and the striped counter-electrode insulating layer 22 and both end portions of the side surface 12 in the y-axis direction. In other words, the side surface insulating layer 220 is formed to expose part of the region 12a and part of the region 12b and cover the entirety of other parts of the side surface 12. A portion of the region 12a not covered with the side surface insulating layer 220 is a portion that is used for connection between the counter-electrode lead 31 and the counter-electrode layer 120. A portion of the region 12b not covered with the side surface insulating layer 220 is a portion that is used for connection between the electrode lead 32 and the electrode layer 110.

As shown in Fig. 6, the provision of the counter-electrode lead 31 and the electrode lead 32 causes the entirety of the side surface 12 of the power-generating element 10 to be covered with any of the counter-electrode lead 31, the electrode lead 32, and the side surface insulating layer 220. Thus, providing the side surface insulating layer 220 makes it possible to sufficiently reduce the possibility of contact between the counter-electrode lead 31 and the electrode layer 110 and the possibility of contact between the electrode lead 32 and the counter-electrode layer 120. This sufficiently reduces the possibility of occurrence of a short circuit on the side surface 12, making it possible to enhance the reliability of the battery 201.

### (Embodiment 3)

The following describes Embodiment 3.

A battery according to Embodiment 3 differs from the battery according to Embodiment 1 in that a lead is made of a plurality of different materials. The following gives a description with a focus on differences from Embodiment 1, and omits or simplifies a description of common features.

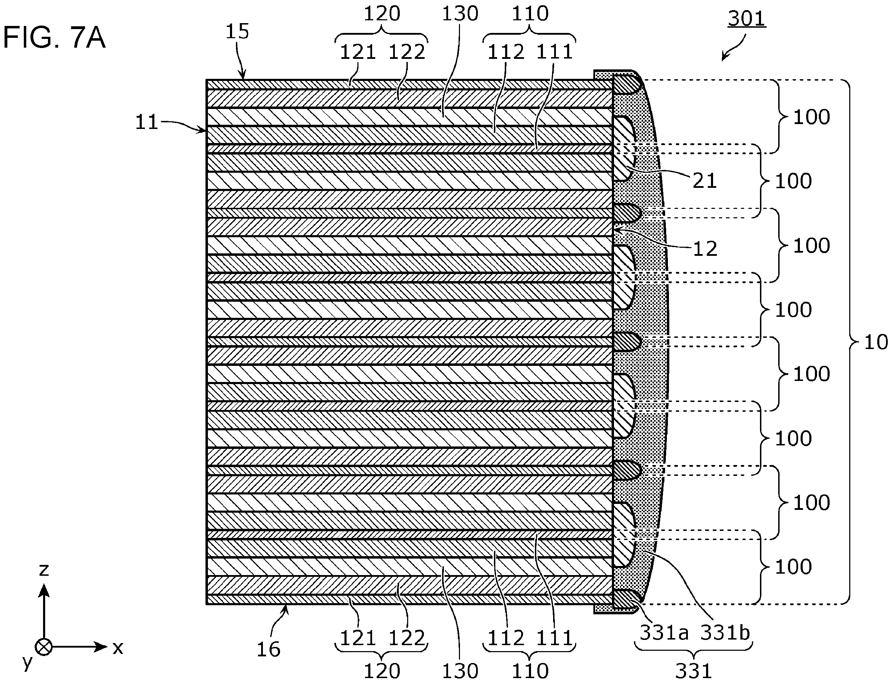

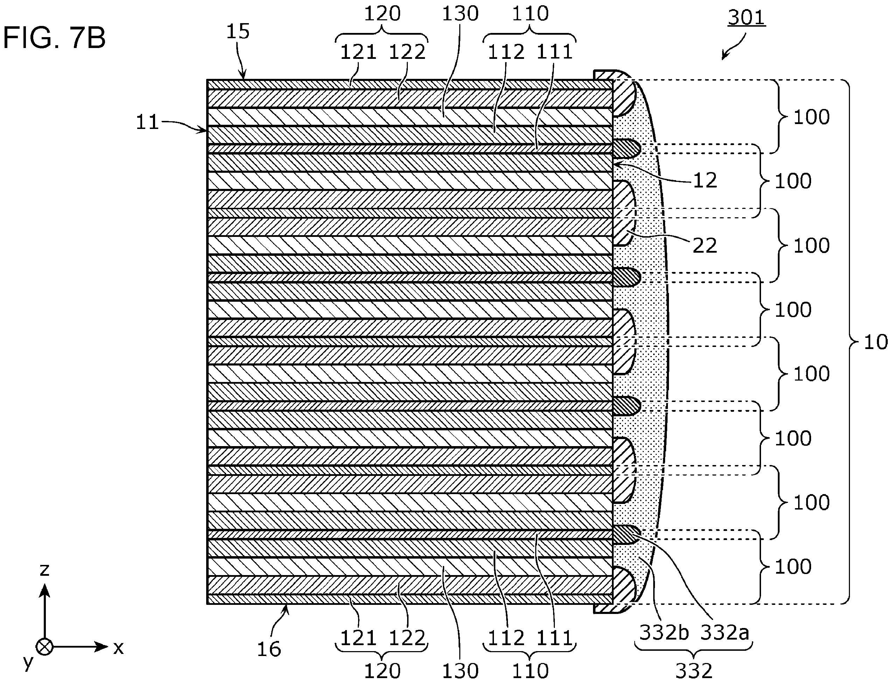

Figs. 7A and 7B are cross-sectional views of a battery 301 according to the present embodiment. It should be noted that a side view of the battery 301 is the same as the side view of the battery 1 shown in Fig. 1. Fig. 7A represents a cross-section of the region 12a of the battery 301 as taken along line IIA-IIA in Fig. 1. Fig. 7B represents a cross-section of the region 12b of the battery 301 as taken along line IIB-IIB in Fig. 1.

As shown in Figs. 7A and 7B, in comparison with the battery 1 according to Embodiment 1, the battery 301 includes a counter-electrode lead 33 1 and an electrode lead 332 instead of the counter-electrode lead 31 and the electrode lead 32.

The counter-electrode lead 331 includes a first conductive member 331a and a second conductive member 331b. The second conductive member 331b is the same as the counter-electrode lead 31 according to Embodiment 1 except that the second conductive member 331b covers the first conductive member 331a. In the present embodiment, the second conductive member 331b is used as an external connecting terminal of the battery 301.

The first conductive member 331a is a conductive member covering at least part of the counter-electrode layer 120 in the region 12a of the side surface 12. Specifically, the first conductive member 331a is in contact with and covers an end face of the counter-electrode collector 121 and part of an end face of the counter-electrode active material layer 122. For example, the first conductive member 331a is provided for each counter-electrode collector 121 and covers the end face of the counter-electrode collector 121 in the region 12a. The first conductive member 331a has a striped shape in a planar view of the side surface 12. On the side surface 12, the first conductive member 331a and the electrode insulating layer 21 are alternately arranged one by one along the z-axis direction.

A plurality of the first conductive members 33 1a are covered with and electrically connected to the second conductive member 33 1b. That is, the counter-electrode layers 120 of the plurality of battery cells 100 are electrically connected to the second conductive member 331b via each separate first conductive member 331a and electrically connected in parallel via the second conductive member 331b.

The first conductive member 331a have different properties from the second conductive member 331b. For example, the first conductive member 331a and the second conductive member 331b are made of different materials. Specifically, the first conductive member 331a is made of a material selected with a focus on high conductivity, alloying with the counter-electrode collector 121, or other properties. Further, the second conductive member 331b is made of a material selected with a focus on flexibility, impact resistance, chemical stability, cost, construction spreadability, or other properties.

The electrode lead 332 includes a first conductive member 332a and a second conductive member 332b. The second conductive member 332b is the same as the electrode lead 32 according to Embodiment 1 except that the second conductive member 332b covers the first conductive member 332a. In the present embodiment, the second conductive member 332b is used as an external connecting terminal of the battery 301.

The first conductive member 332a is a conductive member covering at least part of the electrode layer 110 in the region 12b of the side surface 12. Specifically, the first conductive member 332a is in contact with and covers an end face of the electrode collector 111 and part of an end face of the electrode active material layer 112. For example, the first conductive member 332a is provided for each electrode collector 111 and covers the end face of the -electrode collector 111 in the region 12b. The first conductive member 332a has a striped shape in a planar view of the side surface 12. On the side surface 12, the first conductive member 332a and the counter-electrode insulating layer 22 are alternately arranged one by one along the z-axis direction.

A plurality of the first conductive members 332a are covered with and electrically connected to the second conductive member 332b. That is, the electrode layers 110 of the plurality of battery cells 100 are electrically connected to the second conductive member 332b via each separate first conductive member 332a and electrically connected in parallel via the second conductive member 332b.

The first conductive member 332a have different properties from the second conductive member 332b. For example, the first conductive member 332a and the second conductive member 332b are made of different materials. Specifically, the first conductive member 332a is made of a material selected with a focus on high conductivity, alloying with the electrode collector 111, or other properties. Further, the second conductive member 332b is made of a material selected with a focus on flexibility, impact resistance, chemical stability, cost, construction spreadability, or other properties.

As noted above, the leads of the battery 301 can be made of appropriate materials. This makes it possible to bring about improvement in battery performance and enhance battery manufacturability.

Although Fig. 7A has illustrated an example in which a first conductive member 33 1a is connected to every counter-electrode collector 121, there may be a counter-electrode collector 121 to which no first conductive member 331a is connected. Further, the same applies to the electrode collector 111. Further, either the first conductive member 331a or 332a does not need to be provided.

### (Embodiment 4)

The following describes Embodiment 4.

A battery according to Embodiment 4 differs from the battery according to Embodiment 2 in that the battery according to Embodiment 4 further includes collector terminals. The following gives a description with a focus on differences from Embodiment 2, and omits or simplifies a description of common features.

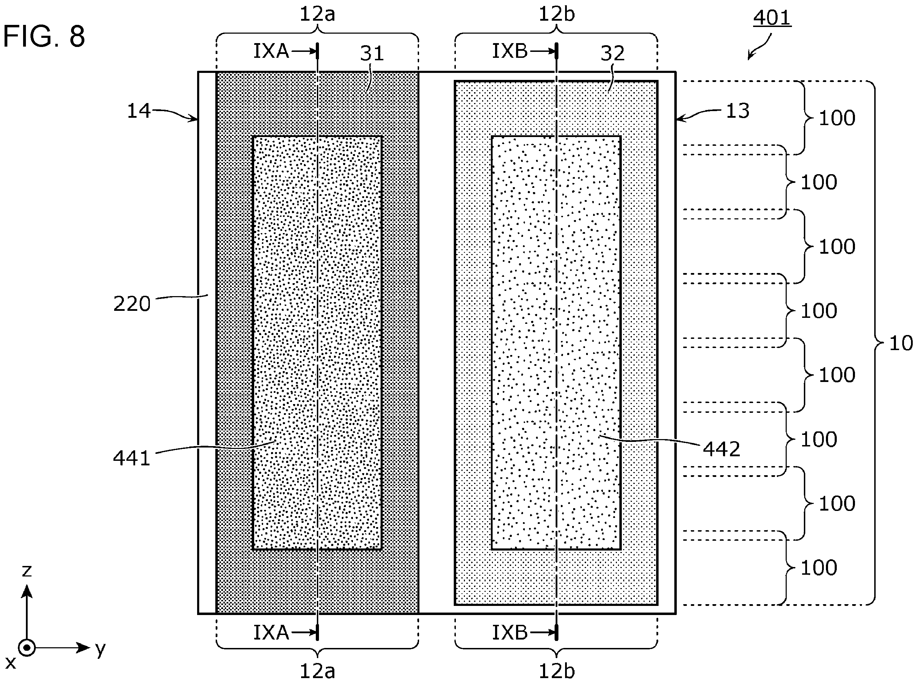

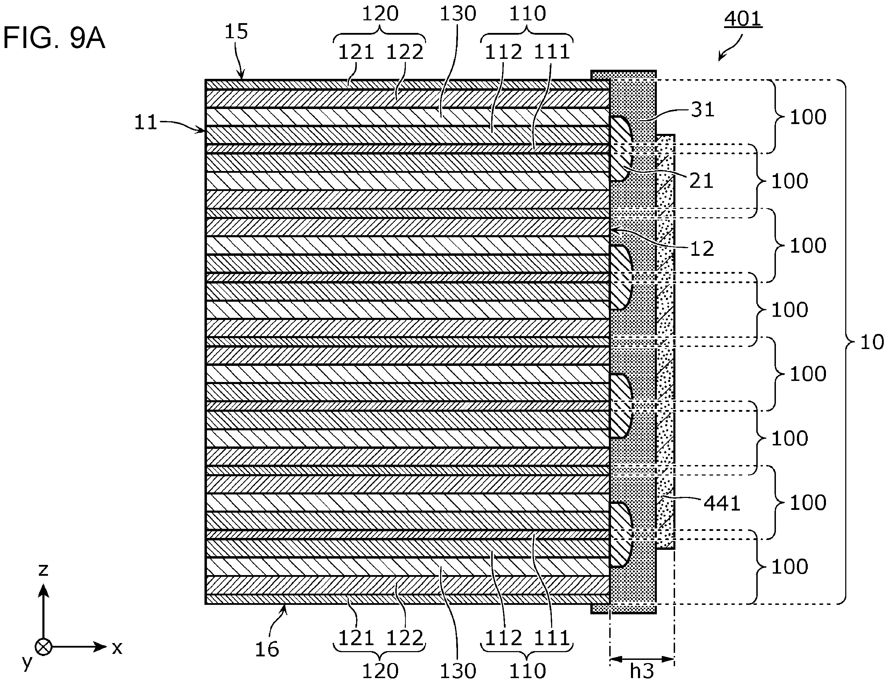

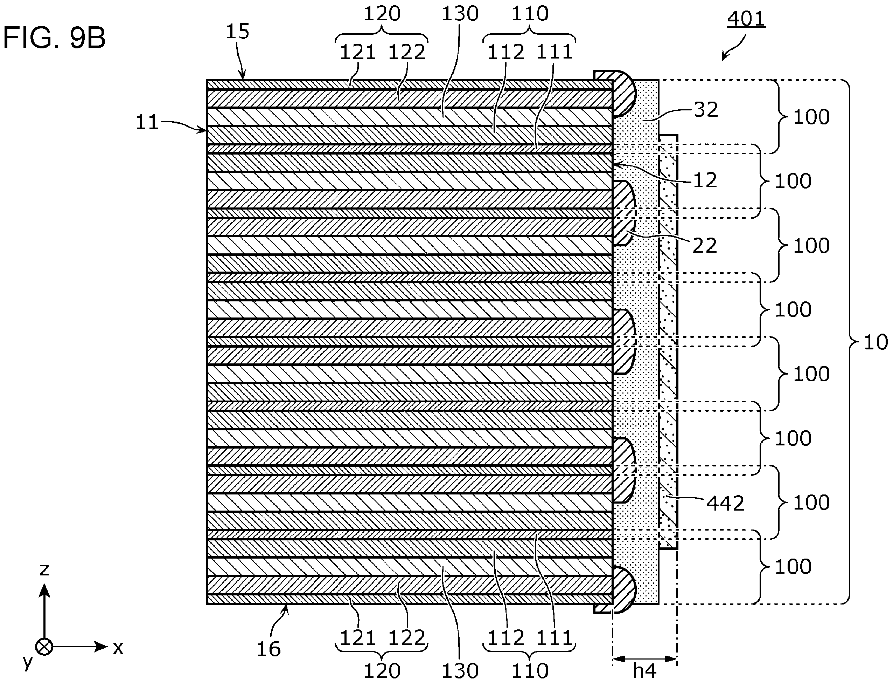

Fig. 8 is a side view of a battery 401 according to the present embodiment. Fig. 9A is a cross-sectional view of the battery 401 according to the present embodiment and, specifically, represents a cross-section taken along line IXA-IXA in Fig. 8. Fig. 9B is a cross-sectional view of the battery 401 according to the present embodiment and, specifically, represents a cross-section taken along line IXB-IXB in Fig. 8.

As shown in Fig. 8, in comparison with the battery 201 according to Embodiment 2, the battery 401 according to the present embodiment includes a counter-electrode collector terminal 441 and an electrode collector terminal 442.

The counter-electrode collector terminal 441 is a conducting terminal connected to the counter-electrode lead 31. The counter-electrode collector terminal 441 is one of external connecting terminals of the battery 401 and, in the present embodiment, is a positive-electrode lead terminal. As shown in Fig. 8 and Fig. 9A, the counter-electrode collector terminal 441 is disposed in the region 12a of the side surface 12 of the power-generating element 10 to cover a surface of the counter-electrode lead 31.

The electrode collector terminal 442 is a conducting terminal connected to the electrode lead 32. The electrode collector terminal 442 is one of the external connecting terminals of the battery 401 and, in the present embodiment, is a negative-electrode lead terminal. As shown in Fig. 8 and Fig. 9B, the electrode collector terminal 442 is disposed in the region 12b of the side surface 12 of the power-generating element 10 to cover a surface of the electrode lead 32.

The counter-electrode collector terminal 441 and the electrode collector terminal 442 are each made of a material possessing electrical conductivity. For example, the counter-electrode collector terminal 441 and the electrode collector terminal 442 are metal foil or metal plates made of metal such as copper, aluminum, or stainless steel. Alternatively, the counter-electrode collector terminal 441 and the electrode collector terminal 442 may be hardened solder.

In the present embodiment, the counter-electrode collector terminal 441 and the electrode collector terminal 442 are connected not to the counter-electrode lead 31 and the electrode lead 32 but to a wiring pattern provided on a printed circuit board on which the battery 401 is mounted. The connections are for example reflow solder connections.

The counter-electrode collector terminal 441 and the electrode collector terminal 442 can be made of a material that is different in property from that of which the counter-electrode lead 31 and the electrode lead 32 are made. For example, as the material of which the counter-electrode lead 31 and the electrode lead 32 are made, a material can be selected with a focus on having high conductivity, alloying with metal contained in a collector, or other properties. As the material of which the counter-electrode collector terminal 441 and the electrode collector terminal 442 are made, a material can be selected with a focus on thermal resistance, mountability, strength, flexibility, impact resistance, chemical stability, cost, construction spreadability, or other properties. In this way, a suitable material can be selected for each member. This makes it possible to bring about improvement in performance of the battery 401 and enhance the manufacturability of the battery 401.

Further, a height h3 of the counter-electrode collector terminal 441 from the side surface 12 is for example equal to a height h4 of the electrode collector terminal 442 from the side surface 12. This facilitates mounting on a flat surface such as a principal surface of the printed circuit board. As shown in Fig. 9A, the height h3 is the distance between a portion of the counter-electrode collector terminal 441 that is furthest away from the side surface 12 and the side surface 12. As shown in Fig. 9B, the height h4 is the distance between a portion of the electrode collector terminal 442 that is furthest away from the side surface 12 and the side surface 12.

Although the counter-electrode collector terminal 441 is provided to cover only part of the counter-electrode lead 31 in a planar view of the side surface 12, the counter-electrode collector terminal 441 may cover the whole of the counter-electrode lead 31. For example, the counter-electrode collector terminal 441 may be larger than the counter-electrode lead 31 in a planar view of the side surface 12. The same applies to the electrode collector terminal 442. It should be noted that the counter-electrode collector terminal 441 and the electrode collector terminal 442 are placed at a spacing from each other so as not to make contact with each other.

### (Embodiment 5)

The following describes Embodiment 5.

A battery according to Embodiment 5 differs from the battery according to Embodiment 1 in that an electrode lead and a counter-electrode lead are provided separately on each of two different side surfaces of the power-generating element. The following gives a description with a focus on differences from Embodiment 1, and omits or simplifies a description of common features.

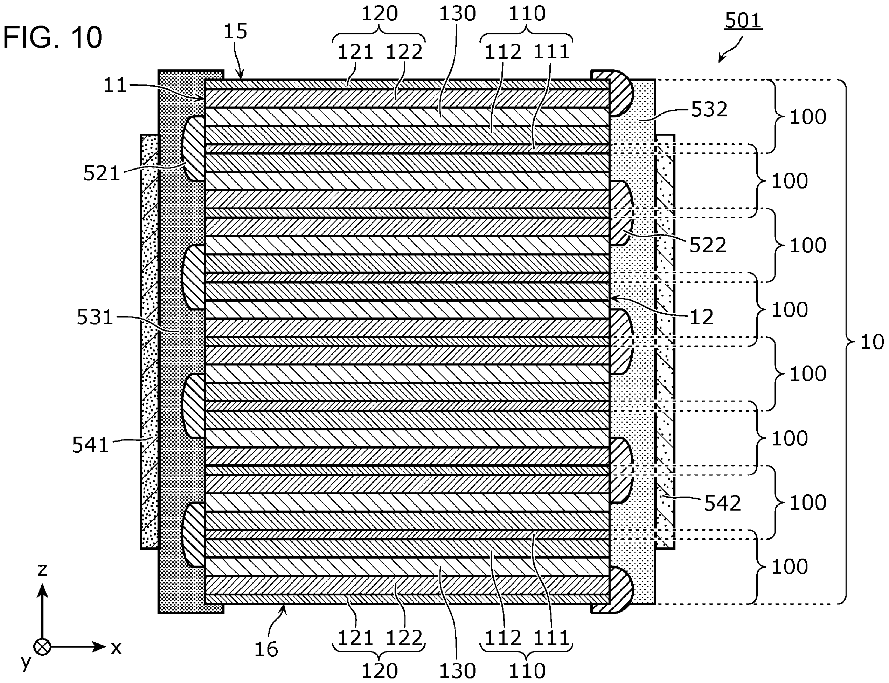

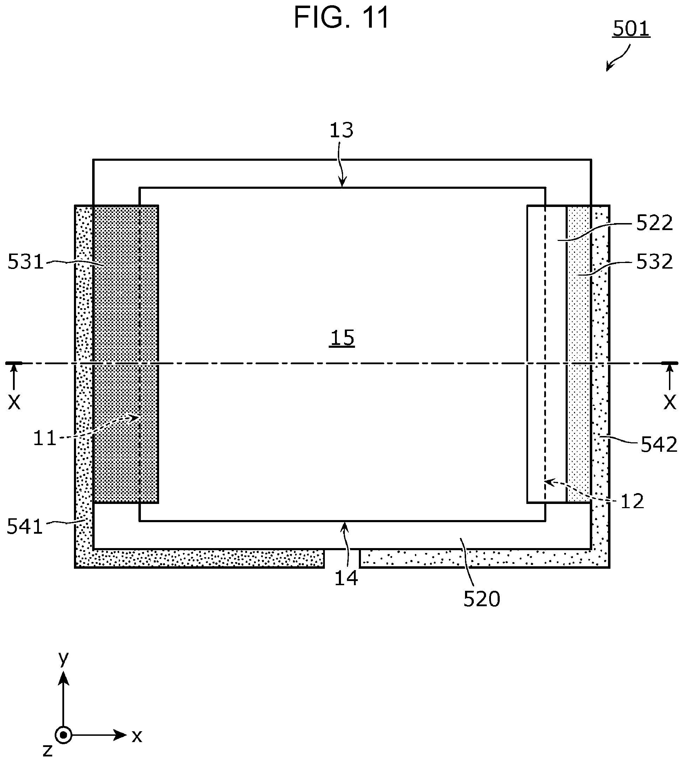

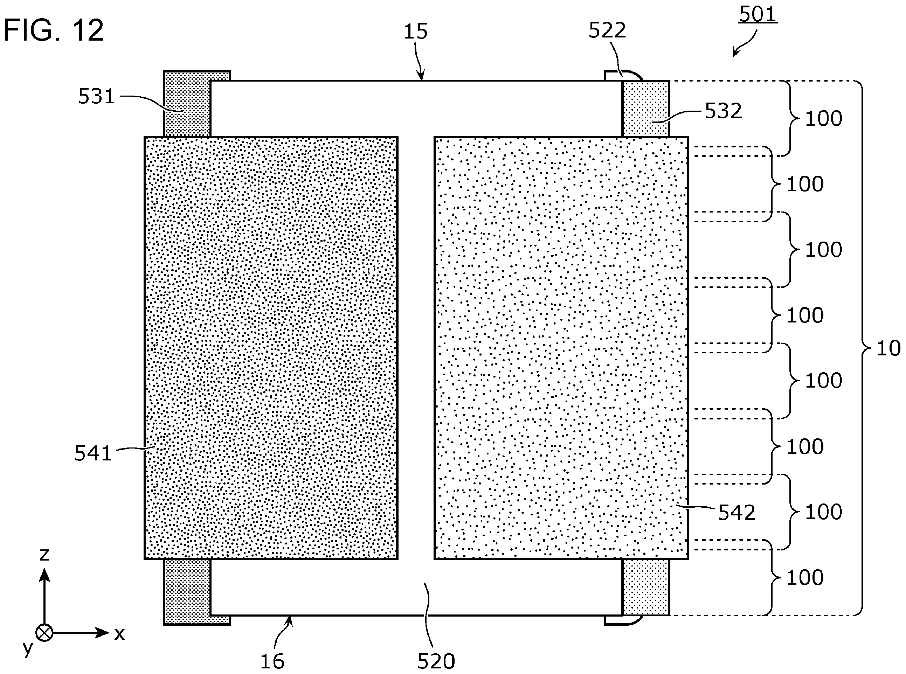

Fig. 10 is a cross-sectional view of a battery 501 according to the present embodiment and represents a cross-section taken along line X-X in Fig. 11. Fig. 11 is a top view of the battery 501 according to the present embodiment. Fig. 12 is a side view of the battery 501 according to the present embodiment. Specifically, Fig. 12 represents the battery 501 as viewed from the front of the side surface 14.

As shown in Figs. 10 and 11, in comparison with the battery 1 according to Embodiment 1, the battery 501 includes an electrode insulating layer 521, a counter-electrode insulating layer 522, a counter-electrode lead 531, and an electrode lead 532 instead of the electrode insulating layer 21, the counter-electrode insulating layer 22, the counter-electrode lead 31, and the electrode lead 32. Further, the battery 501 includes a counter-electrode collector terminal 541 and an electrode collector terminal 542.

In the present embodiment, the electrode insulating layer 521 and the counter-electrode lead 531 are provided on one side surface of the power-generating element 10, and the counter-electrode insulating layer 522 and the electrode lead 532 are provided on another side surface of the power-generating element 10. Specifically, the electrode insulating layer 521 and the counter-electrode lead 531 are provided on the side surface 11. The counter-electrode insulating layer 522 and the electrode lead 532 are provided on the side surface 12.

The electrode insulating layer 521 for example covers all end faces of the electrode collector 111 and the electrode active material layer 112 on the side surface 11. The electrode insulating layer 521 has a striped shape in a planar view of the side surface 11. It should be noted that the electrode insulating layer 521 may cover both end portions of the side surface 11 in the y-axis direction from the lower end to the upper end along the direction of laminating.

The counter-electrode insulating layer 522 for example covers all end faces of the counter-electrode collector 121 and the counter-electrode active material layer 122 on the side surface 12. The counter-electrode insulating layer 522 has a striped shape in a planar view of the side surface 12. It should be noted that the counter-electrode insulating layer 522 may cover both end portions of the side surface 12 in the y-axis direction from the lower end to the upper end along the direction of laminating.

The electrode insulating layer 521 and the counter-electrode insulating layer 522 are different in placement and shape from, but are identical in function to, the electrode insulating layer 21 and the counter-electrode insulating layer 22 according to Embodiment 1. That is, the electrode insulating layer 521 is provided to ensure insulation between the counter-electrode lead 531 and the electrode layer 110. The counter-electrode insulating layer 522 is provided to ensure insulation between the electrode lead 532 and the counter-electrode layer 120.

The counter-electrode lead 531 is provided on the side surface 11. Specifically, the counter-electrode lead 531 covers the side surface 11 and the electrode insulating layer 521 and is connected to the counter-electrode layer 120. More specifically, the counter-electrode lead 531 is in contact with an end face of each of the plurality of counter-electrode layers 120 not covered with the electrode insulating layer 521 on the side surface 11.

The width (i.e. the length in the y-axis direction) of the counter-electrode lead 531 is substantially equal to the width (length in the y-axis direction) of the side surface 11. That is, the width of the counter-electrode lead 531 can be made approximately twice greater than in the case of the battery 1 according to Embodiment 1. This makes it possible to decrease the resistance of contact between the counter-electrode lead 531 and the counter-electrode layer 120, making it possible to enhance large-current characteristics.

The electrode lead 532 is provided on the side surface 12. Specifically, the electrode lead 532 covers the side surface 12 and the counter-electrode insulating layer 522 and is connected to the electrode layer 110. More specifically, the electrode lead 532 is in contact with an end face of each of the plurality of electrode layers 110 not covered with the counter-electrode insulating layer 522 on the side surface 12.

The width (i.e. the length in the y-axis direction) of the electrode lead 532 is substantially equal to the width (length in the y-axis direction) of the side surface 12. That is, the width of the electrode lead 532 can be made approximately twice greater than in the case of the battery 1 according to Embodiment 1. This makes it possible to decrease the resistance of contact between the electrode lead 532 and the electrode layer 110, making it possible to enhance large-current characteristics.

As shown in Fig. 11, the counter-electrode collector terminal 541 is configured in the shape of letter L in top view from the side surface 11 to the side surface 14. The counter-electrode collector terminal 541 is formed, for example, by folding one metal plate. This makes it possible to easily form the counter-electrode collector terminal 541 with high mechanical strength. Alternatively, the counter-electrode collector terminal 541 may be integrally formed by joining or welding a plurality of metal plates.

As shown in Fig. 11, the electrode collector terminal 542 is configured in the shape of letter L in top view from the side surface 12 to the side surface 14. The electrode collector terminal 542 is formed, for example, by folding one metal plate. This makes it possible to easily form the electrode collector terminal 542 with high mechanical strength. Alternatively, the electrode collector terminal 542 may be integrally formed by joining or welding a plurality of metal plates.

As shown in Figs. 11 and 12, the battery 501 according to the present embodiment includes a side surface insulating layer 520 covering the side surface 14. Although the side surface insulating layer 520 covers, for example, the whole of the side surface 14, this is not intended to impose any limitation. The side surface insulating layer 520 needs only be disposed between the counter-electrode collector terminal 541 and the electrode collector terminal 542. In a planar view of the side surface 14, the side surface insulating layer 520 does not need to be provided in a position overlapping neither the counter-electrode collector terminal 541 nor the electrode collector terminal 542.

The side surface insulating layer 520 is made of an insulating material possessing electrical insulating properties. For example, the side surface insulating layer 520 contains resin. Examples of the resin include, but are not limited to, epoxy resin. As the insulating material, an inorganic material may be used. A usable insulating material is selected on the basis of various properties such as flexibility, gas barrier properties, impact resistance, and thermal resistance. The side surface insulating layer 520 may be integrally made of the same insulating material as the electrode insulating layer 521 provided on the side surface 11 and the counter-electrode insulating layer 522 provided on the side surface 12. It should be noted that the side surface insulating layer 520 may also cover the side surface 13.

Thus, in the battery 501 according to the present embodiment, the counter-electrode collector terminal 541 and the electrode collector terminal 542 are provided at the side surface 14, which is different from the side surfaces 11 and 12, on which the counter-electrode lead 531 and the electrode lead 532 are provided. Both positive-electrode and negative-electrode terminals of the battery 501 are disposed at the identical side surface 14. This allows for compact mounting of the battery 501 as in the case of the battery 1 according to Embodiment 1. For example, this makes it possible to mount a board type battery 501 in the upright position, thus making it possible keep a distance from a heat source and enhance mountability and reliability.

Further, the counter-electrode lead 531 and the electrode lead 532 each function to make a parallel connection of the plurality of battery cells 100. As shown in Fig. 10, the counter-electrode lead 531 and the electrode lead 532 are formed to be in close contact with and cover the side surfaces 11 and 12 of the power-generating element 10, respectively. This makes it possible to reduce the volumes of these leads. That is, this makes it possible to make terminal electrodes smaller in volume than collecting tab electrodes that have conventionally been used, thus bringing about improvement in energy density of the battery 501 per volume.

### (Embodiment 6)

The following describes Embodiment 6.

A battery according to Embodiment 6 differs from the battery according to Embodiment 1 in that the battery according to Embodiment 6 includes a sealing member. The following gives a description with a focus on differences from Embodiment 1, and omits or simplifies a description of common features.

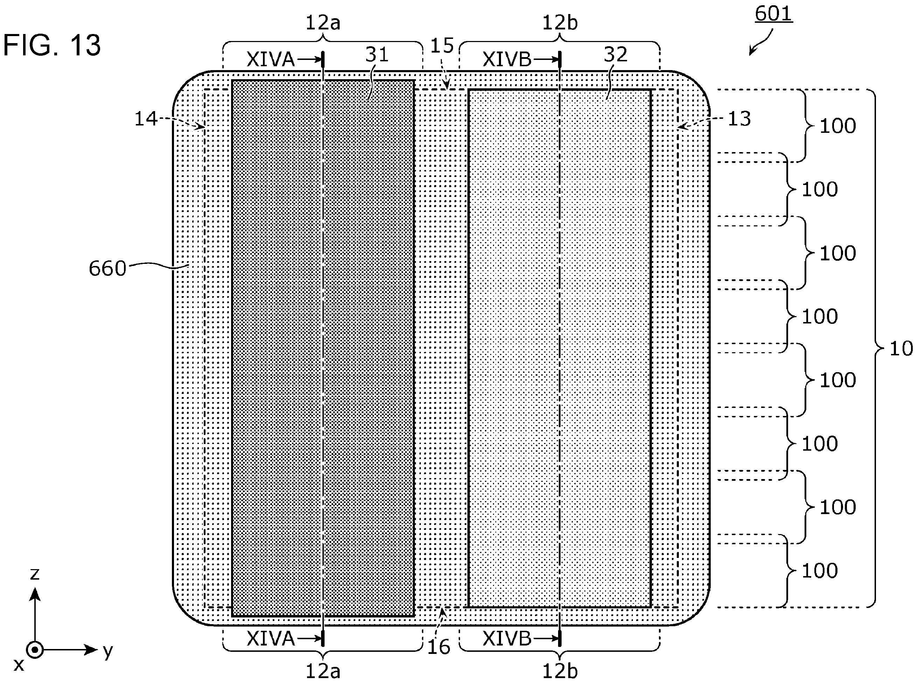

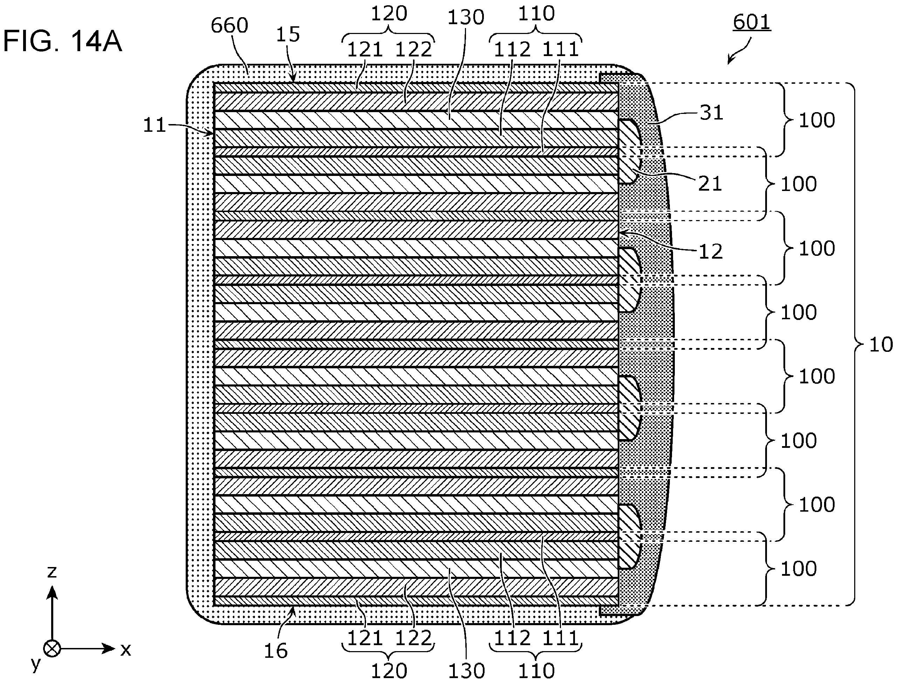

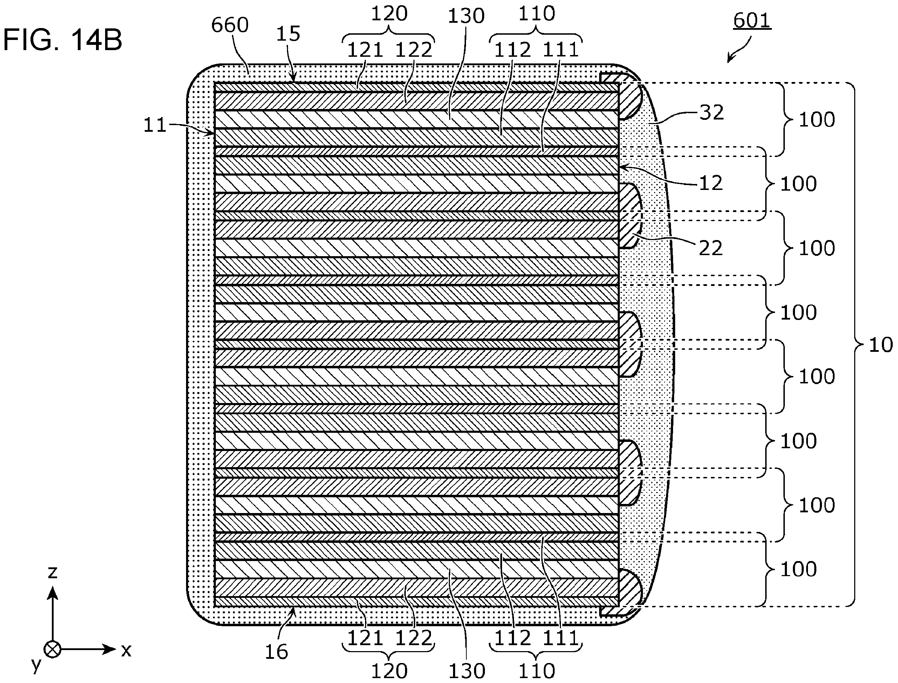

Fig. 13 is a side view of a battery 601 according to the present embodiment. Fig. 14A is a cross-sectional view of the battery 601 according to the present embodiment and, specifically, represents a cross-section taken along line XIVA-XIVA in Fig. 13. Fig. 14B is a cross-sectional view of the battery 601 according to the present embodiment and, specifically, represents a cross-section taken along line XIVB-XIVB in Fig. 13.

As shown in Fig. 13 and Figs. 14A and 14B, in comparison with the battery 1 according to Embodiment 1, the battery 601 includes a sealing member 660.

The sealing member 660 exposes at least part of the counter-electrode lead 31 and at least part of the electrode lead 32 and seals the power-generating element 10. The sealing member 660 is for example provided so that the power-generating element 10, the electrode insulating layer 21, and the counter-electrode insulating layer 22 are not exposed.

The sealing member 660 is for example made of an insulating material possessing electrical insulating properties. A usable example of the insulating material is a common publicly-known material for a sealing member in a battery. A usable example of the insulating material is a resin material. It should be noted that the insulating material may be a material possessing insulating properties and not possessing ion conductivity. For example, the insulating material may be at least one of epoxy resin, acrylic resin, polyimide resin, and silsesquioxane.

It should be noted that the sealing member 660 may contain a plurality of different insulating materials. For example, the sealing member 660 may have a multilayer structure. Layers of the multilayer structure may be made of different materials and have different properties.

The sealing member 660 may contain a particulate metal oxide material. Usable examples of the metal oxide material include silicon oxide, aluminum oxide, titanium oxide, zinc oxide, cerium oxide, ferric oxide, tungsten oxide, zirconium oxide, calcium oxide, zeolite, and glass. For example, the sealing member 660 may be made of a resin material in which a plurality of particles made of the metal oxide material are dispersed.

The particle size of the metal oxide material needs only be less than or equal to a spacing between the electrode collector 111 and the counter-electrode collector 121. Examples of the particle shape of the metal oxide material include, but are not limited to, a spherical shape, an oval spherical shape, and a rod shape.

Providing the sealing member 660 makes it possible to improve the reliability of the battery 601 in various respects such as mechanical strength, short-circuit prevention, and moisture prevention.

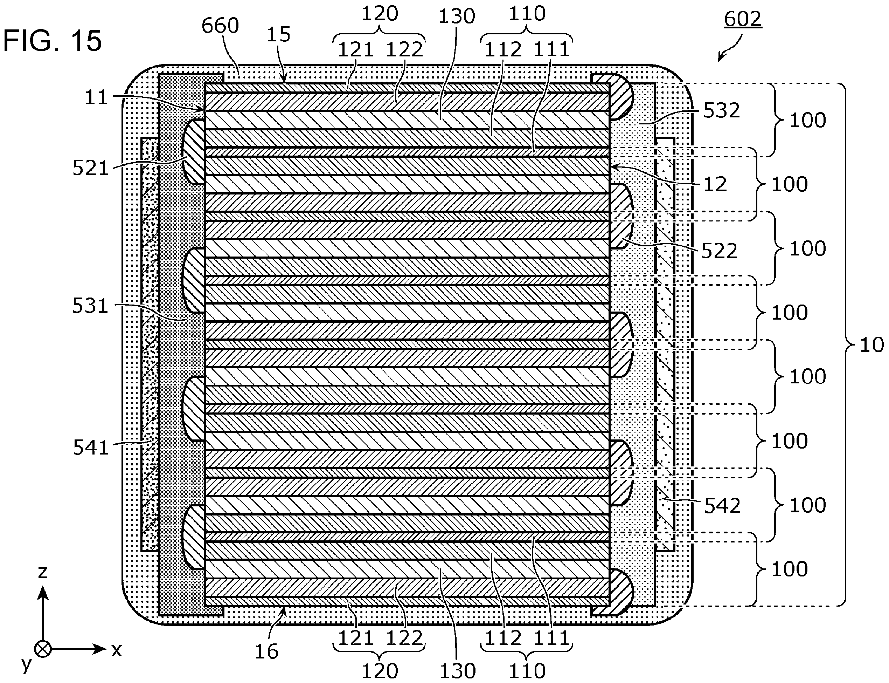

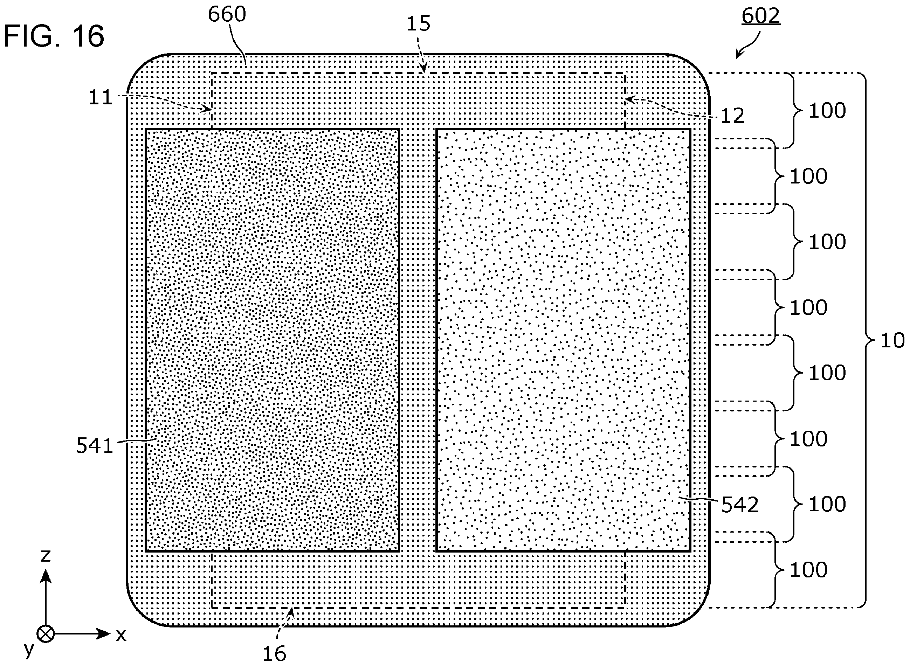

Although an example in which the battery 1 according to Embodiment 1 includes a sealing member 660 has been illustrated here, a battery according to another embodiment may too include a sealing member 660. For example, as in the case of a battery 602 shown in Figs. 15 and 16, the battery 501 according to Embodiment 5 may include a sealing member 660. Fig. 15 is a cross-sectional view of the battery 602 according to a modification of the present embodiment. Fig. 16 is a side view of the battery 602 according to the modification of the present embodiment.

In the battery 602 shown in Figs. 15 and 16, the sealing member 660 exposes the counter-electrode collector terminal 541 and the electrode collector terminal 542 and covers the power-generating element 10, the electrode insulating layer 521, the counter-electrode insulating layer 522, the counter-electrode lead 531, and the electrode lead 532. The sealing member 660 exposes only portions of the metal plates constituting the counter-electrode collector terminal 541 and the electrode collector terminal 542 located at the side surface 14.

### (Embodiment 7)

The following describes Embodiment 7.

A battery according to Embodiment 7 differs from the battery according to Embodiment 1 in that a collector included in a battery cell projects further than an active material layer. The following gives a description with a focus on differences from Embodiment 1, and omits or simplifies a description of common features.

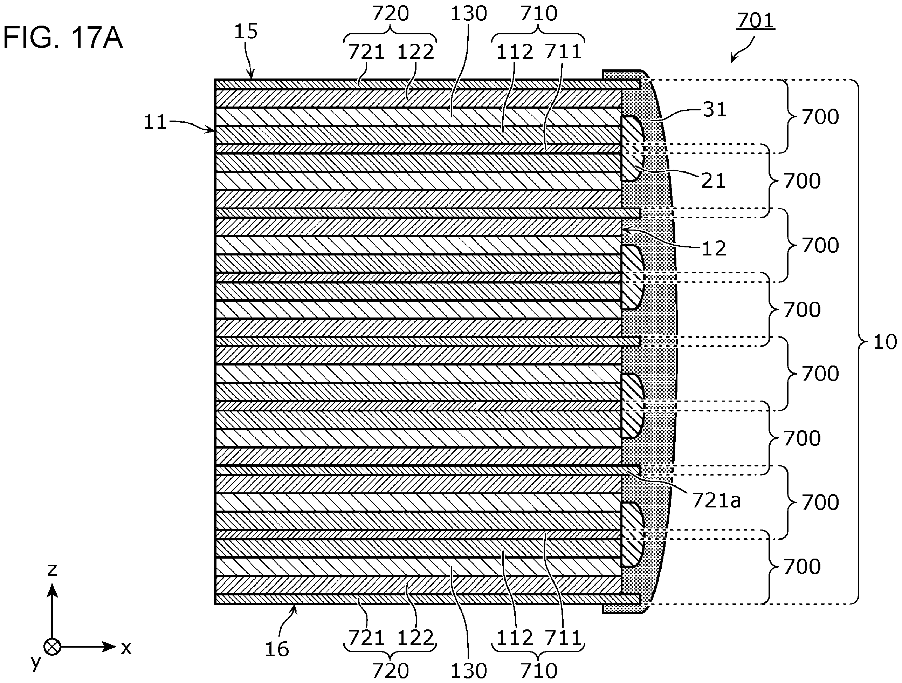

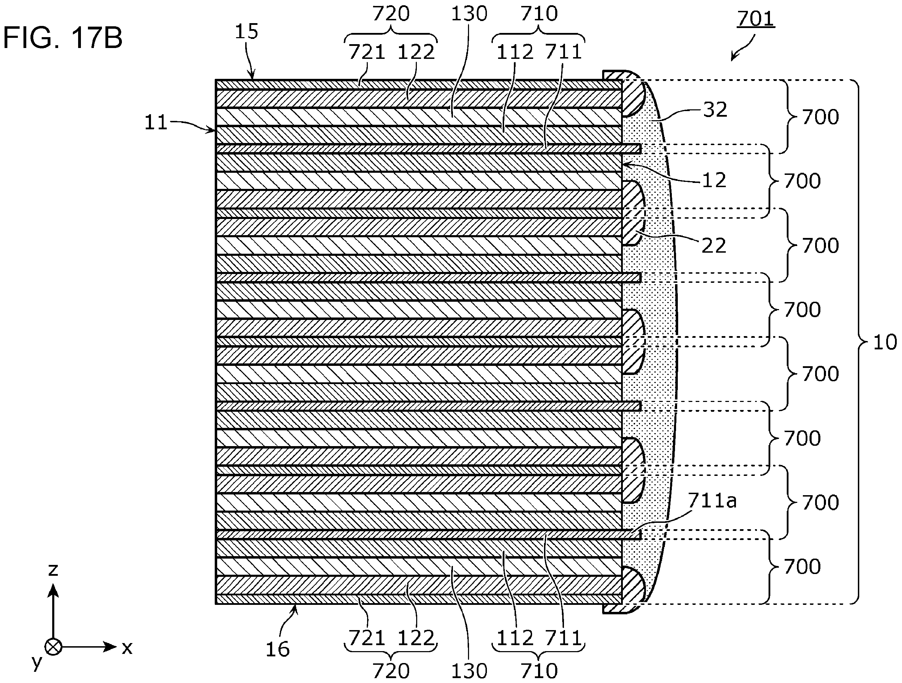

Figs. 17A and 17B are cross-sectional views of a battery 701 according to the present embodiment. It should be noted that a side view of the battery 701 is the same as the side view of the battery 1 shown in Fig. 1. Fig. 17A represents a cross-section of the region 12a of the battery 701 as taken along line IIA-IIA in Fig. 1. Fig. 17B represents a cross-section of the region 12b of the battery 701 as taken along line IIB-IIB in Fig. 1.

As shown in Figs. 17A and 17B, in comparison with the battery 1 shown in Fig. 1, the power-generating element 10 of the battery 701 includes battery cells 700 instead of the battery cells 100.

Each of the plurality of battery cells 700 includes an electrode layer 710, a counter-electrode layer 720, and a solid electrolyte layer 130. The electrode layer 710 includes an electrode collector 711 and an electrode active material layer 112. The counter-electrode layer 720 includes a counter-electrode collector 721 and a counter-electrode active material layer 122.

As shown in Fig. 17A, in the region 12a of the side surface 12, the counter-electrode collector 721 projects further than the counter-electrode active material layer 122. In the present embodiment, in the region 12a of the side surface 12, end faces of the counter-electrode active material layer 122, the solid electrolyte layer 130, the electrode active material layer 112, and the electrode collector 711 are flush with one another and form a flat surface. The counter-electrode collector 721 projects outward from the flat surface. The term "outward" here means a direction away from the center of the power-generating element 10 and, when based on the side surface 12, corresponds to a positive direction of the x axis.

The projection of the counter-electrode collector 721 causes the counter-electrode lead 31 to make contact with a principal surface of a projecting portion 721a of the counter-electrode collector 721. It should be noted that the projecting portion 721a is a portion of the counter-electrode collector 721 located further on a positive side of the x axis than an end face of the counter-electrode active material layer 122 on the positive side of the x axis. This makes it possible to increase the area of contact between the counter-electrode lead 31 and the counter-electrode collector 721, making it possible to decrease the resistance of connection between the counter-electrode lead 31 and the counter-electrode collector 721.

There is no particular limit in the amount of projection of the counter-electrode collector 721, i.e. the length of the projecting portion 721a in the x-axis direction. For example, the amount of projection of the counter-electrode collector 721 is 4.5 or more times as great as the thickness of the counter-electrode collector 721 (i.e. the length in the z-axis direction). Thus, in the present embodiment, the counter-electrode lead 31 is in contact with both principal surfaces of the projecting portion 721a. This makes it possible to make the area of contact ten or more times larger than in a case where the counter-electrode collector 721 does not project.

Alternatively, the amount of projection of the counter-electrode collector 721 may be nine or more times as great as the thickness of the counter-electrode collector 721. This makes it possible to, even in a case were the counter-electrode lead 31 is in contact with only one principal surface of the projecting portion 721a, make the area of contact ten or more times larger than in a case where the counter-electrode collector 721 does not project.

In the present embodiment, in the region 12b of the side surface 12, the electrode collector 711 too has a similar configuration. That is, as shown in Fig. 17B, in the region 12b of the side surface 12, the electrode collector 711 projects further than the electrode active material layer 112. In the present embodiment, in the region 12b of the side surface 12, end faces of the electrode active material layer 112, the solid electrolyte layer 130, the counter-electrode active material layer 122, and the counter-electrode collector 721 are flush with one another and form a flat surface. The electrode collector 711 projects outward (specifically, in the positive direction of the x axis) from the flat surface.

The projection of the electrode collector 711 causes the electrode lead 32 to make contact with a principal surface of a projecting portion 711a of the electrode collector 711. It should be noted that the projecting portion 711a is a portion of the electrode collector 711 located further on the positive side of the x axis than an end face of the electrode active material layer 112 on the positive side of the x axis. This makes it possible to increase the area of contact between the electrode lead 32 and the electrode collector 711, making it possible to decrease the resistance of connection between the electrode lead 32 and the electrode collector 711.

There is no particular limit in the amount of projection of the electrode collector 711, i.e. the length of the projecting portion 711a in the x-axis direction. For example, as in the case of the counter-electrode collector 721, the amount of projection of the electrode collector 711 may be 4.5 or more times or nine or more times as great as the thickness of the electrode collector 711.

The projecting portions 711a and 721a are each formed by not placing the counter-electrode active material layer 122 or the electrode active material layer 112 at an end of a collector. Alternatively, the projecting portions 711a and 721a are each formed by forming the counter-electrode active material layer 122 or the electrode active material layer 112 on the whole surface of a collector and then removing an end of the counter-electrode active material layer 122 or the electrode active material layer 112. This removal is carried out, for example, by cutting just short of the collector, grinding, sandblasting, brushing, etching, or plasma irradiation so that only the collector remains. At this point in time, part of the counter-electrode active material layer 122 or the electrode active material layer 112 may remain without being removed.

As noted above, the battery 701 according to the present embodiment causes an increase in area of contact between a collector and a lead, thus causing a decrease in resistance of connection between the collector and the lead. This makes it possible to improve the large-current characteristics of the battery 701 and, for example, makes fast charging possible.

Although the present embodiment has illustrated an example in which both the counter-electrode collector 721 and the electrode collector 711 project, only either of them may project.

### (Embodiment 8)

The following describes Embodiment 8.

A battery according to Embodiment 8 differs from the battery according to Embodiment 1 in that at a side surface of a power-generating element, an active material layer or other layers not covered with an insulating layer recedes further than a collector. The following gives a description with a focus on differences from Embodiment 1, and omits or simplifies a description of common features.

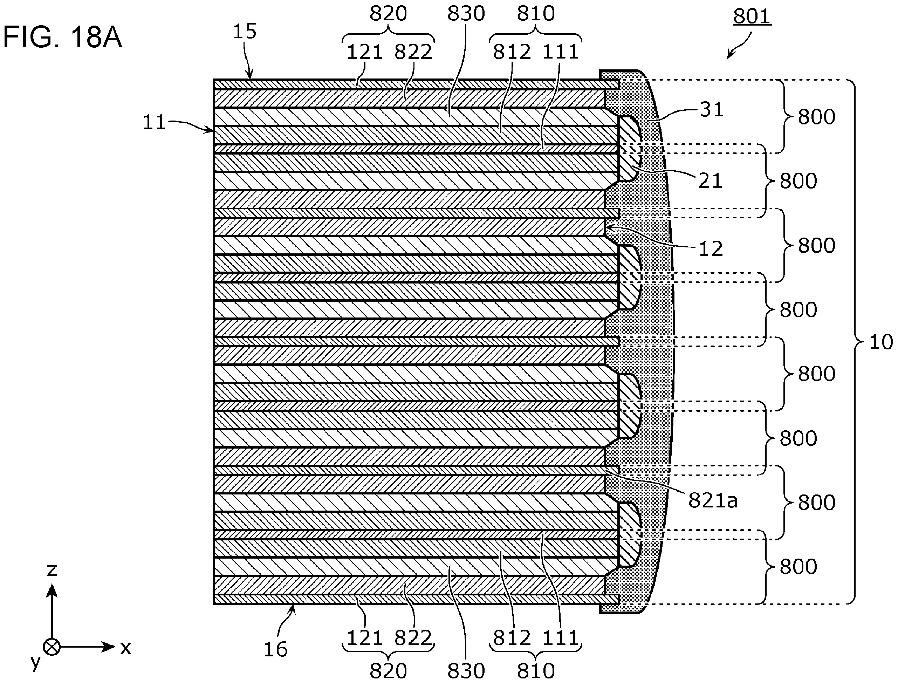

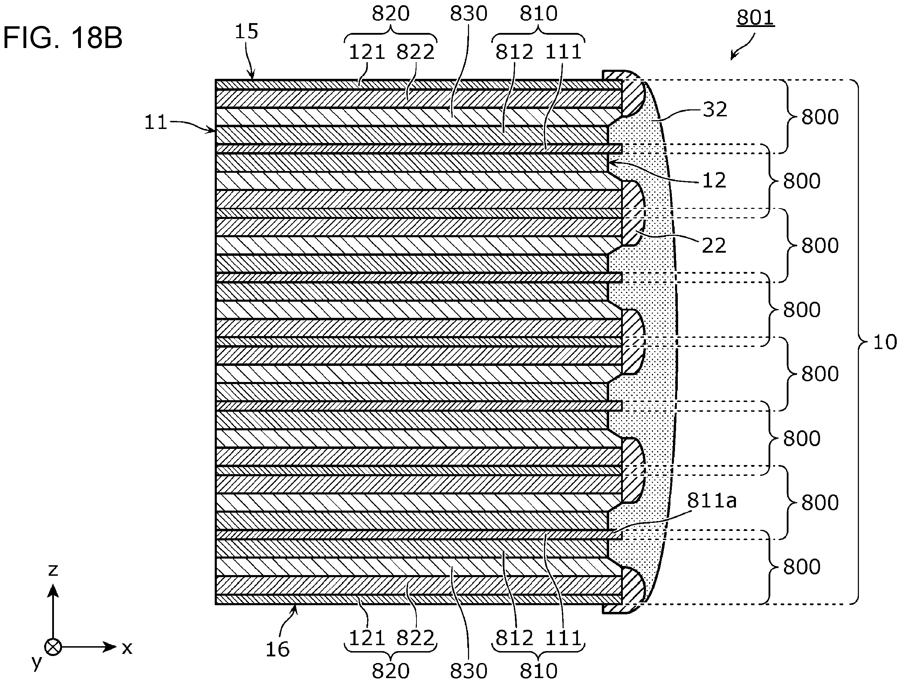

Figs. 18A and 18B are cross-sectional views of a battery 801 according to the present embodiment. It should be noted that a side view of the battery 801 is the same as the side view of the battery 1 shown in Fig. 1. Fig. 18A represents a cross-section of the region 12a of the battery 801 as taken along line IIA-IIA in Fig. 1. Fig. 18B represents a cross-section of the region 12b of the battery 801 as taken along line IIB-IIB in Fig. 1. As shown in Figs. 18A and 18B, in comparison with the battery 1 shown in Fig. 1, the power-generating element 10 of the battery 801 includes battery cells 800 instead of the battery cells 100.

Each of the plurality of battery cells 800 includes an electrode layer 810, a counter-electrode layer 820, and a solid electrolyte layer 830. The electrode layer 810 includes an electrode collector 111 and an electrode active material layer 812. The counter-electrode layer 820 includes a counter-electrode collector 121 and a counter-electrode active material layer 822.

As shown in Figs. 18A and 18B, in the region 12a of the side surface 12, the counter-electrode active material layer 822 recedes further than the electrode layer 810. Further, the counter-electrode active material layer 822 recedes further than the counter-electrode collector 121. Specifically, the counter-electrode active material layer 822 is depressed further inward than both the electrode layer 810 and the counter-electrode collector 121. The term "inward" here means a direction toward the center of the power-generating element 10 and, when based on the side surface 12, corresponds to a negative direction of the x axis.

In the present embodiment, in the region 12a of the side surface 12, at least part of the solid electrolyte layer 830 recedes further than the electrode layer 810. Specifically, a portion of an end face of the solid electrolyte layer 830 not covered with the electrode insulating layer 21 is inclined with respect to the z-axis direction.

The recession of the counter-electrode active material layer 822 causes the counter-electrode collector 121 to relatively project. The projection of the counter-electrode collector 121 causes the counter-electrode lead 31 to make contact with a principal surface of a projecting portion 821a of the counter-electrode collector 121. This makes it possible to increase the area of contact between the counter-electrode lead 31 and the counter-electrode collector 121, making it possible to decrease the resistance of connection between the counter-electrode lead 31 and the counter-electrode collector 121.

There is no particular limit in the amount of recession of the counter-electrode active material layer 822, i.e. the amount of projection of the counter-electrode collector 121. For example, as in the case of Embodiment 7, the amount of recession of the counter-electrode active material layer 822 may be 4.5 or more times or nine or more times as great as the thickness of the counter-electrode collector 121.

In the present embodiment, in the region 12b of the side surface 12, the electrode active material layer 812 too has a similar configuration. That is, in the region 12b of the side surface 12, the electrode active material layer 812 recedes further than the counter-electrode layer 820. Further, the electrode active material layer 812 recedes further than the electrode collector 111. Specifically, the electrode active material layer 812 recedes further inward (specifically, in the negative direction of the x axis) than both the counter-electrode layer 820 and the electrode collector 111.

In the present embodiment, in the region 12b of the side surface 12, at least part of the solid electrolyte layer 830 recedes further than the counter-electrode layer 820. Specifically, a portion of an end face of the solid electrolyte layer 830 not covered with the counter-electrode insulating layer 22 is inclined with respect to the z-axis direction.

The recession of the electrode active material layer 812 causes the electrode collector 111 to relatively project. The projection of the electrode collector 111 causes the electrode lead 32 to make contact with a principal surface of a projecting portion 811a of the electrode collector 111. This makes it possible to increase the area of contact between the electrode lead 32 and the electrode collector 111, making it possible to decrease the resistance of connection between the electrode lead 32 and the electrode collector 111.

There is no particular limit in the amount of recession of the electrode active material layer 812, i.e. the amount of projection of the electrode collector 111. For example, as in the case of Embodiment 7, the amount of recession of the electrode active material layer 812 may be 4.5 or more times or nine or more times as great as the thickness of the electrode collector 111.

It should be noted that the recession of an active material layer is achieved by the same method as the method for achieving the projection of a collector in Embodiment 7. For example, the recession of the active material layer is achieved by cutting just short of the collector, grinding, sandblasting, brushing, etching, or plasma irradiation so that only the collector remains.

In the present embodiment, the electrode collector 111 and the counter-electrode collector 121 are the same in shape and size as each other and have their contours in conformance with each other in planar view. For this reason, as shown in Figs. 18A and 18B, the electrode collector 111 and the counter-electrode collector 121 have their ends aligned in the z-axis direction in cross-sectional view. As will be described in detail in section "Manufacturing Method" below, en-bloc cutting of a layered product formed by laminating the plurality of battery cells 100 causes the electrode collector 111 and the counter-electrode collector 121 to have their contours in conformance with each other. After that, by causing the end faces of the active material layers to recede, the battery 801 according to the present embodiment is manufactured. In this way, the battery cells 800 can be subjected to simultaneous processing such as en-bloc cutting. This makes it possible to reduce variations in the characteristic of the battery cells 800.

As noted above, the battery 801 according to the present embodiment causes an increase in area of contact between a collector and a lead, thus causing a decrease in resistance of connection between the collector and the lead. This makes it possible to improve the large-current characteristics of the battery 801 and, for example, makes fast charging possible.

Although the present embodiment has illustrated an example in which both the counter-electrode active material layer 822 and the electrode active material layer 812 recede, only either of them may recede. Further, the solid electrolyte layer 830 does not need to recede in at least either the region 12a or 12b of the side surface 12.

### (Embodiment 9)

The following describes Embodiment 9.

A battery according to Embodiment 9 differs from the battery according to Embodiment 1 in coverage by an electrode insulating layer and a counter-electrode insulating layer. The following gives a description with a focus on differences from Embodiment 1, and omits or simplifies a description of common features.

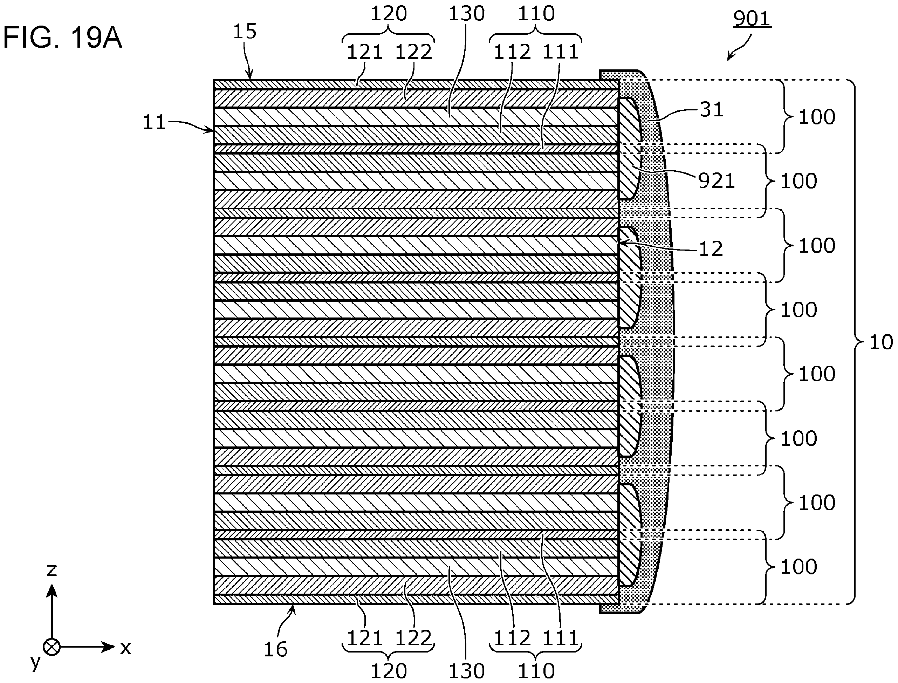

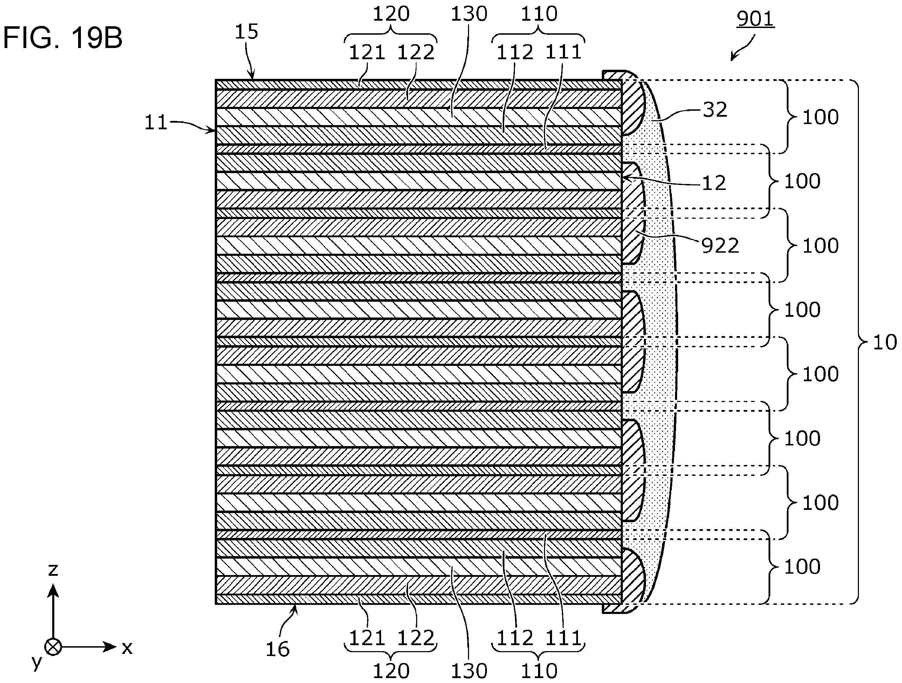

Figs. 19A and 19B are cross-sectional views of a battery 901 according to the present embodiment. As shown in Figs. 19A and 19B, in comparison with the battery 1 shown in Fig. 1, the battery 901 includes an electrode insulating layer 921 and a counter-electrode insulating layer 922 instead of the electrode insulating layer 21 and the counter-electrode insulating layer 22.

As shown in Fig. 19A, the electrode insulating layer 921 covers part of the solid electrolyte layer 130 and part of the counter-electrode layer 120 as well as the electrode layer 110 in the region 12a the side surface 12. That is, the electrode insulating layer 921 covers an area from the electrode layer 110 to part of the counter-electrode layer 120. Specifically, the electrode insulating layer 921 covers part of the counter-electrode active material layer 122. In the present embodiment, the electrode insulating layer 921 continuously covers an area from at least part of the counter-electrode active material layer 122 of one of the two adjacent battery cells 100 to at least part of the counter-electrode active material layer 122 of the other of the two adjacent battery cells 100. For example, the electrode insulating layer 921 completely covers one electrode collector 111, electrode active material layers 112 located on both sides of the electrode collector 111, and two solid electrolyte layers 130. For example, the contours of the electrode insulating layer 921 overlap the counter-electrode active material layer 122 in a planar view of the side surface 12.

This drastically reduces the risk of exposing the electrode layer 110 even if there are fluctuations in width (length in the z-axis direction) due to variations in the manufacture of the electrode insulating layer 921. This makes it possible to reduce the risk of a short circuit between the electrode layer 110 and the counter-electrode layer 120 via the counter-electrode lead 31. Further, the electrode insulating layer 921 becomes embedded in asperities on an end face of the counter-electrode active material layer 122, bringing about improvement in adhesion strength of the electrode insulating layer 921 and improvement in insulation reliability.

It should be noted that the electrode insulating layer 921 may cover the whole of the counter-electrode active material layer 122 in the region 12a of the side surface 12. Specifically, the contours of the electrode insulating layer 921 may overlap a boundary between the counter-electrode active material layer 122 and the counter-electrode collector 121.

In the present embodiment, in the region 12b of the side surface 12, the counter-electrode insulating layer 922 too has a similar configuration. Specifically, the counter-electrode insulating layer 922 covers part of the solid electrolyte layer 130 and part of the electrode layer 110 as well as the counter-electrode layer 120 on the side surface 12. That is, the counter-electrode insulating layer 922 covers an area from the counter-electrode layer 120 to part of the electrode layer 110. Specifically, the counter-electrode insulating layer 922 covers part of the electrode active material layer 112. In the present embodiment, the counter-electrode insulating layer 922 continuously covers an area from at least part of the electrode active material layer 112 of one of the two adjacent battery cells 100 to at least part of the electrode active material layer 112 of the other of the two adjacent battery cells 100. For example, the counter-electrode insulating layer 922 completely covers one counter-electrode collector 121, counter-electrode active material layers 122 located on both sides of the counter-electrode collector 121, and two solid electrolyte layers 130.

For example, the contours of the counter-electrode insulating layer 922 overlap the electrode active material layer 112 in a planar view of the side surface 12. This drastically reduces the risk of exposing the counter-electrode layer 120 even if there are fluctuations in width (length in the z-axis direction) due to variations in the manufacture of the counter-electrode insulating layer 922. This makes it possible to reduce the risk of a short circuit between the counter-electrode layer 120 and the electrode layer 110 via the electrode lead 32. Further, the counter-electrode insulating layer 922 becomes embedded in asperities on an end face of the electrode active material layer 112, bringing about improvement in adhesion strength of the counter-electrode insulating layer 922 and improvement in insulation reliability.

It should be noted that the counter-electrode insulating layer 922 may cover the whole of the electrode active material layer 112 on the side surface 12. Specifically, the contours of the counter-electrode insulating layer 922 may overlap a boundary between the electrode active material layer 112 and the electrode collector 111.

### (Manufacturing Method)

The following describes a method for manufacturing a battery according to each of the aforementioned embodiments.

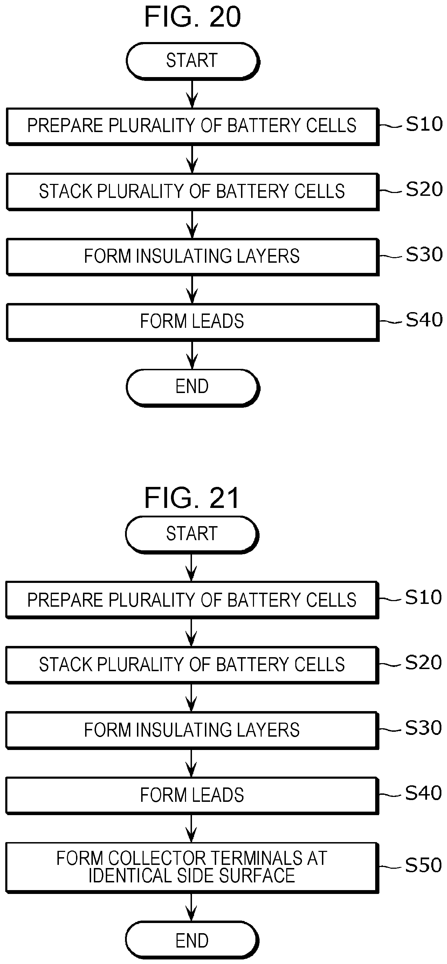

Fig. 20 is a flow chart showing an example of a method for manufacturing a battery according to each embodiment. In the following, an example of the battery 1 according to Embodiment 1 is described.

As shown in Fig. 20, first, a plurality of battery cells are prepared (S10). The battery cells thus prepared are for example battery cells 100A, 100B, and 100C shown in Figs. 3A to 3C.

Next, the plurality of battery cells 100 are laminated (S20). Specifically, a layered product is formed by laminating the plurality of battery cells 100 in sequence so that orders of arrangement of the electrode layer 110, the counter-electrode layer 120, and the solid electrolyte layer 130 alternate. In the present embodiment, a power-generating element 10 shown in Fig. 4 is formed by laminating an appropriate combination of battery cells 100A, 100B, and 100C. The power-generating element 10 is an example of the layered product.

After the plurality of battery cells 100 have been laminated, side surfaces of the power-generating element 10 may be planarized. For example, a power-generating element 10 whose side surfaces are flat can be formed by en-bloc cutting of the layered product composed of the plurality of battery cells 100. The cutting process is executed, for example, with a cutter, a laser, or a jet.

Next, insulating layers are formed on a side surface of the power-generating element 10 (S30). Specifically, an electrode insulating layer 21 is formed in the region 12a of the side surface 12 so as to cover the electrode layer 110. Further, a counter-electrode insulating layer 22 is formed in the region 12b of the side surface 12 so as to cover the counter-electrode layer 120.

The electrode insulating layer 21 and the counter-electrode insulating layer 22 are formed, for example, by coating and curing of a fluid resin material. The coating is executed by an inkjet method, a spray method, a screen printing method, a gravure printing method, or other methods. The curing is executed by drying, heating, photoirradiation, or other processes, depending on the resin material used.

In the formation of the electrode insulating layer 21 and the counter-electrode insulating layer 22, a process of forming a protecting member through masking with a tape or other materials or through resist processing may be executed on a region in which an insulating layer should not be formed, in order that an end face of the counter-electrode collector 121 and an end face of the electrode collector 111 do not become insulated. The electrical conductivity of each collector can be ensured by removing the protecting member after the formation of the electrode insulating layer 21 and the counter-electrode insulating layer 22.

Next, leads are formed on a side surface of the power-generating element 10 (S40). Specifically, a counter-electrode lead 31 electrically connected to a plurality of the counter-electrode layers 120 is formed so as to cover the region 12a of the side surface 12 and the electrode insulating layer 21. An electrode lead 32 that electrically connects a plurality of the electrode layers 110 is formed so as to cover the region 12b of the side surface 12 and the counter-electrode insulating layer 22.

For example, the counter-electrode lead 31 is formed by coating and curing of a conductive paste such as conductive resin so as to cover the electrode insulating layer 21 and a portion of the region 12a of the side surface 12 not covered with the electrode insulating layer 21. Further, the electrode lead 32 is placed by coating and curing of conductive resin so as to cover the counter-electrode insulating layer 22 and a portion of the region 12b of the side surface 12 not covered with the counter-electrode insulating layer 22. Alternatively, the counter-electrode lead 31 and the electrode lead 32 may be formed, for example, by printing, plating, deposition, sputtering, welding, soldering, joining, or other methods.

Through these steps, a battery 1 shown in Fig. 1 can be manufactured.

Each separate one of the plurality of battery cells 100 prepared in step S10 or a laminated body of the plurality of battery cells may be subjected to a step of pressing them in the direction of laminating.

Further, after the formation of a layered product (S20) and before the formation of leads (S40), first conductive members 331a and 332a shown in Figs. 7A and 7B may be formed. The first conductive members 331a and 332a may be formed, for example, by printing, plating, deposition, sputtering, welding, soldering, joining, or other methods.

Further, after the formation of a layered product (S20) or after the formation of insulating layers (S30), an end face recession process may be executed. Specifically, by causing end faces of the active material layers of the power-generating element 10 to recede, the collectors are caused to project further than the active material layers. More specifically, in the region 12a of the side surface 12 of the power-generating element 10, the counter-electrode collector 121, which is part of the counter-electrode layer 120, is caused to project further than the counter-electrode active material layer 122, which is another part of the counter-electrode layer 120. Similarly, in the region 12b of the side surface 12 of the power-generating element 10, the electrode collector 111, which is part of the electrode layer 110, is caused to project further than the electrode active material layer 112, which is another part of the electrode layer 110.

The end face recession process involves, for example, grinding, sandblasting, brushing, etching, or plasma irradiation of the side surface 12. In this case, the electrode insulating layer 21 and the counter-electrode insulating layer 22 function as protecting members against each process. For example, in a case where the side surface 12 is sandblasted, a portion covered with the electrode insulating layer 21 or the counter-electrode insulating layer 22 is not ground, and a portion not covered with the electrode insulating layer 21 or the counter-electrode insulating layer 22 or, specifically, an end face of the counter-electrode layer 120, an end face of the electrode layer 110, or other parts are ground into a recession. At this point in time, the active material layers are removed more than the collectors, as the c active material layers are brittler than the collectors. This causes the counter-electrode active material layer 122 to recede further than the counter-electrode collector 121 and causes the electrode active material layer 112 to recede further than the electrode collector 111. That is, as shown in Figs. 18A and 18B, a counter-electrode active material layer 822 with a receding end face and an electrode active material layer 812 with a receding end face are formed. In other words, the counter-electrode collector 121 projects further than counter-electrode active material layer 822, the electrode collector 111 projects further than the electrode active material layer 812.

The foregoing has described a case where the counter-electrode lead 31 and the electrode lead 32 are formed on the identical side surface 12. However, as in the case of the battery 501 shown in Figs. 10 to 12, the counter-electrode lead 31 and the electrode lead 32 may be formed on different side surfaces of the power-generating element 10.

Fig. 21 is a flow chart showing a method for manufacturing a battery 501. As shown in Fig. 21, the steps up to the formation of leads are the same as those of the manufacturing method shown in Fig. 20. In steps S30 and S40, an electrode insulating layer 521 and a counter-electrode lead 531 are formed on the side surface 11, and a counter-electrode insulating layer 522 and an electrode lead 532 are formed on the side surface 12. In step S30, a side surface insulating layer 520 is formed so as to cover the side surface 14.

After that, collector terminals are formed at the side surface 14 of the power-generating element 10 (S50). Specifically, a counter-electrode collector terminal 541 is formed so as to cover an area from the side surface 11 to the side surface 14. Further, an electrode collector terminal 542 is formed to cover an area from the side surface 12 to the side surface 14.

The counter-electrode collector terminal 541 and the electrode collector terminal 542 are each formed by placing an electrically conductive material such as a metallic material in a desired region by plating, printing, soldering, thermal spraying, or other processes. Alternatively, the counter-electrode collector terminal 541 and the electrode collector terminal 542 may each be formed by welding or joining a folded metal plate or other sheets.

Further, after the formation of leads (S40) or after the formation of collector terminals (S50), a sealing member 660 shown in Figs. 13 to 16 may be formed. The sealing member 660 is formed, for example, by coating and curing of a fluid resin material. The coating is executed by an inkjet method, a spray method, a screen printing method, a gravure printing method, or other methods. The curing is executed by drying, heating, photoirradiation, or other processes, depending on the resin material used.

### (Other Embodiments)

In the foregoing, a battery and a method for manufacturing a battery according to one or more aspects have been described with reference to embodiments; however, the present disclosure is not intended to be limited to these embodiments. Applications to the present embodiments of various types of modification conceived of by persons skilled in the art and other embodiments constructed by combining some constituent elements of different embodiments are encompassed in the scope of the present disclosure, provided such applications and embodiments do not depart from the spirit of the present disclosure.

For example, although an example has been illustrated in which both the uppermost and lowermost layer of a power-generating element are counter-electrode layers, at least either the uppermost or lowermost layer may be an electrode layer. In this case, in a case where the electrode layer located at the uppermost layer or the lowermost layer is provided with a counter-electrode collector terminal, an insulating counter-electrode intermediate layer is needed between the electrode layer and the counter-electrode collector terminal. Meanwhile, in this case, no electrode intermediate layer needs to be provided between the counter-electrode layer and the electrode collector terminal.

Further, for example, although the foregoing embodiments have illustrated an example in which one collector is shared between adjacent battery cells, the collector does not need to be shared. Two counter-electrode collectors may be joined on top of each other, and two electrode collectors may be joined on top of each other.

Further, for example, although the foregoing embodiments have illustrated an example in which the first side surface, on which the counter-electrode lead is provided, and the second side surface, on which the electrode lead is provided, are side surfaces facing away from each other, this is not intended to impose any limitation. For example, the first side surface and the second side surface may be side surfaces adjacent to each other.

Further, each of the foregoing embodiments is subject, for example, to various changes, substitutions, additions, and omissions in the scope of the claims or the scope of equivalents thereof.

### Industrial Applicability

The present disclosure is applicable to batteries for electronics, electrical appliances, electric vehicles, or other devices.

### Reference Signs List

1, 201, 301, 401, 501, 601, 602, 701, 801, 901 battery
10 power-generating element
11, 12, 13, 14 side surface
12a, 12b region
15, 16 principal surface
21, 521, 921 electrode insulating layer
22, 522, 922 counter-electrode insulating layer
31, 331, 531 counter-electrode lead
32, 332, 532 electrode lead
100, 100A, 100B, 100C, 700, 800 battery cell
110, 110B, 710, 810 electrode layer
111, 711 electrode collector
112, 812 electrode active material layer
120, 120C, 720, 820 counter-electrode layer
121, 721 counter-electrode collector
122, 822 counter-electrode active material layer
130, 830 solid electrolyte layer
220, 520 side surface insulating layer
331a, 332a first conductive member
331b, 332b second conductive member
441, 541 counter-electrode collector terminal
442, 542 electrode collector terminal
660 sealing member
711a, 721a, 811a, 821a projecting portion

## Claims

1. A battery comprising:
a power-generating element including a plurality of battery cells each including an electrode layer, a counter-electrode layer, and a solid electrolyte layer located between the electrode layer and the counter-electrode layer, the plurality of battery cells being electrically connected in parallel and laminated;
an electrode insulating member covering the electrode layer in a first region of one of a plurality of side surfaces of the power-generating element;
a counter-electrode lead, electrically connected to the counter-electrode layer, that covers the first region and the electrode insulating member;
a counter-electrode insulating member covering the counter-electrode layer in a second region of one of the plurality of side surfaces; and
an electrode lead, electrically connected to the electrode layer, that covers the second region and the counter-electrode insulating member,
wherein the first region and the second region are located on an identical side surface of the power-generating element.

2. The battery according to claim 1, wherein a height of the counter-electrode lead from the identical side surface and a height of the electrode lead from the identical side surface are equal to each other.

3. The battery according to claim 1 or 2, further comprising a sealing member that exposes at least part of the counter-electrode lead and at least part of the electrode lead and seals the power-generating element.

4. The battery according to claim 1 or 2, further comprising:
a counter-electrode collector terminal disposed in the first region and connected to the counter-electrode lead; and
an electrode collector terminal disposed in the second region and connected to the electrode lead.

5. A battery comprising:
a power-generating element including a plurality of battery cells each including an electrode layer, a counter-electrode layer, and a solid electrolyte layer located between the electrode layer and the counter-electrode layer, the plurality of battery cells being electrically connected in parallel and laminated;
an electrode insulating member covering the electrode layer on a first side surface of the power-generating element;
a counter-electrode lead, electrically connected to the counter-electrode layer, that covers the first side surface and the electrode insulating member;
a counter-electrode insulating member covering the counter-electrode layer on a second side surface of the power-generating element;
an electrode lead, electrically connected to the electrode layer, that covers the second side surface and the counter-electrode insulating member;
a counter-electrode collector terminal connected to the counter-electrode lead; and
an electrode collector terminal connected to the electrode lead,
wherein the counter-electrode collector terminal and the electrode collector terminal are provided at an identical side surface of the power-generating element.

6. The battery according to claim 5, further comprising an insulating layer disposed between the counter-electrode collector terminal and the identical side surface and between the electrode collector terminal and the identical side surface.

7. The battery according to claim 5 or 6, wherein the identical side surface is a side surface that is different from both the first side surface and the second side surface.

8. The battery according to any one of claims 4 to 7, wherein a height of the counter-electrode collector terminal from the identical side surface and a height of the electrode collector terminal from the identical side surface are equal to each other.

9. The battery according to any one of claims 4 to 8, further comprising a sealing member that exposes at least part of the counter-electrode collector terminal and at least part of the counter-electrode collector terminal and seals the power-generating element, the electrode lead, and the counter-electrode lead.

10. The battery according to any one of claims 1 to 9, wherein
the counter-electrode layer includes
a counter-electrode collector, and
a counter-electrode active material layer located between the counter-electrode collector and the solid electrolyte layer,
at a side surface covered by the counter-electrode lead, the counter-electrode collector projects further than the counter-electrode active material layer, and
the counter-electrode lead is in contact with a principal surface of the counter-electrode collector.

11. The battery according to claim 10, wherein at the side surface covered by the counter-electrode lead, the counter-electrode active material layer recedes further than the electrode layer.

12. The battery according to claim 10 or 11, wherein at the side surface covered by the counter-electrode lead, an end face of the counter-electrode collector and an end face of the electrode layer are even with each other when viewed from a direction orthogonal to the principal surface.

13. The battery according to any one of claims 1 to 12, wherein the electrode insulating member covers at least part of the solid electrolyte layer on a side surface covered by the counter-electrode lead.

14. The battery according to claim 13, wherein the electrode insulating member covers an area from the electrode layer to at least part of the counter-electrode layer on the side surface covered by the counter-electrode lead.

15. The battery according to any one of claims 1 to 14, wherein
the electrode insulating member covers the electrode layer of each of the plurality of battery cells on a side surface covered by the counter-electrode lead, and
the counter-electrode lead is electrically connected to the counter-electrode layer of each of the plurality of battery cells.

16. The battery according to any one of claims 1 to 15, wherein the electrode insulating member has a striped shape in a planar view of a side surface covered by the counter-electrode lead.

17. The battery according to any one of claims 1 to 16, wherein the counter-electrode lead includes a first conductive member that makes contact with the counter-electrode layer and a second conductive member covering the first conductive member.

18. The battery according to any one of claims 1 to 17, wherein the electrode insulating member or the counter-electrode insulating member contains resin.

19. A method for manufacturing a battery, the method comprising the steps of:
preparing a plurality of battery cells each including an electrode layer, a counter-electrode layer, and a solid electrolyte layer located between the electrode layer and the counter-electrode layer;
forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate;
covering the electrode layer with an electrode insulating member in a first region of one of a plurality of side surfaces of the layered product and covering the counter-electrode layer with a counter-electrode insulating member in a second region of one of the plurality of side surfaces of the layered product; and
covering the first region and the electrode insulating member with a counter-electrode lead electrically connected to the counter-electrode layer and covering the second region and the counter-electrode insulating member with an electrode lead electrically connected to the electrode layer,
wherein the first region and the second region are located on an identical side surface of the layered product.

20. A method for manufacturing a battery, the method comprising the steps of:
preparing a plurality of battery cells each including an electrode layer, a counter-electrode layer, and a solid electrolyte layer located between the electrode layer and the counter-electrode layer;
forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate;
covering the electrode layer with an electrode insulating member on a first side surface of the layered product and covering the counter-electrode layer with a counter-electrode insulating member on a second side surface of the layered product;
covering the first side surface and the electrode insulating member with a counter-electrode lead electrically connected to the counter-electrode layer and covering the second side surface and the counter-electrode insulating member with an electrode lead electrically connected to the electrode layer; and
providing, at an identical side surface of the layered product, a counter-electrode collector terminal connected to the counter-electrode lead and an electrode collector terminal connected to the electrode lead.
